# EUROPÄISCHE PATENTANMELDUNG

(11) **EP 3 705 764 A1**
(43) Veröffentlichungstag der Anmeldung: **09.09.2020**
(21) Anmeldenummer: 19160833.0
(22) Anmeldetag: 05.03.2019
(51) Int. Cl.: F16K 31/06, F16K 31/10, F16K 11/052

(54) **VORRICHTUNG ZUR DURCHFLUSSREGELUNG EINES FLUIDS**

(71) Anmelder: Asco Numatics GmbH, 75248 Ölbronn-Dürrn (DE)
(72) Erfinder: Spittelmeister, Uwe, 76275 Ettlingen (DE); Metternich de Oliveira, Peter, 75433 Maulbronn (DE); Ams, Felix, 75236 Kämpfelbach (DE); Gustafsson, Morgan, 43895 Hällingsjö (SE)
(74) Vertreter: Witte, Weller & Partner Patentanwälte mbB

(57) **Zusammenfassung**

Die Offenbarung betrifft eine Vorrichtung zur Durchflussregelung eines Fluids, mit einem Ventilgehäuse (24) mit zumindest zwei Ventilanschlüssen (26, 28, 30), zumindest einem Ventilsitz (50, 52), einem Ventilglied (54) mit einem Schließkörper (58), und einer Betätigungseinheit (16) zur Betätigung des Schließkörpers (58), wobei das Ventilglied (54) ferner einen Betätigungsabschnitt aufweist, der über zumindest einen Verbindungssteg mit dem zumindest einen Schließkörper (58) zur Bewegung des Schließkörpers (58) verbunden ist, wobei sich zwischen dem Schließkörper (58) und dem Betätigungsabschnitt eine umlaufende Dichtung (68) erstreckt, die den Schließkörper (58) und den Betätigungsabschnitt voneinander trennt, wobei der zumindest eine Verbindungssteg derart gestaltet ist, dass der Schließkörper bei einer Betätigung des Betätigungsabschnitts durch die Betätigungseinheit (16) verschwenkbar ist, um das Ventilglied (54) und somit den Schließkörper (58) relativ zum zumindest einen Ventilsitz (50, 52) zu bewegen, und wobei das Ventilglied (54) bei der Bewegung des Schließkörpers (58) zur Deformationsminimierung in einem Durchtrittsbereich der Dichtung (68), durch den sich der zumindest eine Verbindungssteg erstreckt, ausgebildet ist.

## Beschreibung

Die vorliegende Offenbarung betrifft eine Vorrichtung zur Durchflussregelung eines Fluids, mit einem Ventilgehäuse mit zumindest zwei Ventilanschlüssen, wobei im Ventilgehäuse zumindest ein Fluidpfad ausgebildet ist, der sich zwischen den zumindest zwei Ventilanschlüssen erstreckt, zumindest einem Ventilsitz, der dem zumindest einen Fluidpfad zugeordnet ist, einem Ventilglied mit einem Schließkörper, der mit dem zumindest einen Ventilsitz koppelbar ist, um den zumindest einen Fluidpfad zu sperren oder freizugeben, und einer Betätigungseinheit zur Betätigung des Schließkörpers, wobei das Ventilglied ferner einen Betätigungsabschnitt aufweist, der über zumindest einen Verbindungssteg mit dem zumindest einen Schließkörper zur Bewegung des Schließkörpers verbunden ist, wobei sich zwischen dem Schließkörper und dem Betätigungsabschnitt eine umlaufende Dichtung erstreckt, die den Schließkörper und den Betätigungsabschnitt voneinander trennt, und wobei der zumindest eine Verbindungssteg derart gestaltet ist, dass der Schließkörper bei einer Betätigung des Betätigungsabschnitts durch die Betätigungseinheit verschwenkbar ist, um das Ventilglied und somit den Schließkörper relativ zum zumindest einen Ventilsitz zu bewegen.

Zumindest in beispielhaften Ausgestaltungen betrifft die vorliegende Offenbarung Ventile und Ventilanordnungen, die als 3/2-Wegeventil gestaltet sind, also als Ventil mit drei Anschlüssen und zwei Schaltstellungen. Dies kann in beispielhaften Ausführungsformen eine Ventilgestaltung mit Umschaltfunktion/Umsteuerung umfassen. Dies schließt jedoch nicht aus, dass in anderen beispielhaften Ausgestaltungen die Ventile und Ventilanordnungen als 2/2-Wegeventil gestaltet sind, also als Ventil mit zwei Anschlüssen und zwei Schaltstellungen.

Zumindest in beispielhaften Ausgestaltungen betrifft die vorliegende Offenbarung mediengetrennte Ventile und Ventilanordnungen. Im Sinne der vorliegenden Offenbarung ist ein mediengetrenntes Ventil ein solches, dem das Fluid (auch bezeichnet als Medium) nicht mit Teilen der Ventilbetätigung/Betätigungseinheit in Berührung kommt. Solche Ventile und Ventilanordnungen sind beispielsweise derart gestaltet, dass zwischen der Ventilkammer und Einrichtungen zur Betätigung eines in der Ventilkammer angeordneten Ventilglieds eine hermetische Abdichtung gegeben ist. Es ist also konstruktionsseitig kein Medienübertritt aus der Ventilkammer in Richtung auf die Betätigungseinheit ermöglicht. Mediengetrennte Ventile eignen sich für medizinische, pharmazeutische und/oder industrielle Anwendungen mit diversen Medien. Aufgrund der Medientrennung eignen sich solche Ventile auch für problematische/aggressive Medien.

Zumindest in beispielhaften Ausgestaltungen betrifft die vorliegende Offenbarung sogenannte Flapper-Ventile. Vorrichtungen der oben genannten oder ähnlicher Art sind beispielhaft aus der EP 3 239 572 A1, der EP 2 365 239 A1 sowie aus der EP 2 068 056 A1 bekannt.

Die EP 2 068 056 A1 zeigt eine Ventilanordnung für flüssige oder gasförmige Medien, die ein Ventilglied in Form eines sogenannten Flappers aufweist. Das Ventilglied ist als elastisch aufgenommene, auslenkbare Klappe gestaltet. Das Ventilglied umfasst einen Schließkörper, der wahlweise einen von zwei Ventilsitzen verschließen und den jeweils anderen freigeben kann. Auf diese Weise lässt sich eine Durchflussregelung bewerkstelligen. Die zugehörige Ventilanordnung umfasst drei Ventilanschlüsse in einem Ventilgehäuse, die zwei Fluidpfade definieren, zwischen denen mittels dem Ventilglied und dem Schließkörper hin- und hergeschaltet werden kann.

Zur Betätigung des Ventils ist ein Elektromagnet vorgesehen, der einen Zuganker umfasst, der auf ein gabelartig gestaltetes Betätigungselement einwirkt, das mit dem Schließkörper gekoppelt ist. Das gabelförmige Betätigungselement ist zwischen dem Zuganker des Elektromagneten und dem Schließkörper des Ventilglieds angeordnet und stellt eine Kopplung zwischen beiden Komponenten bereit. Der Elektromagnet ist als einfach wirkender Magnet gestaltet. Der Elektromagnet wirkt gegen die Kraft einer Schließfeder. Somit kann die Ventilanordnung in einem bestromten Zustand des Elektromagneten in einem ersten Zustand und in einem nicht bestromten Zustand des Elektromagneten in einem zweiten Zustand betrieben werden, denen entsprechende Stellungen des Ventilglieds zugeordnet sind.

De EP 3 239 572 A1 zeigt eine ähnliche Anordnung, wobei jedoch zwei Elektromagneten vorgesehen sind, die additiv auf den Schließkörper einwirken.

Aus der EP 2 365 239 A1 ist eine Vorrichtung zur Durchflussregelung eines flüssigen oder gasförmigen Mediums bekannt, die eine Ventilanordnung umfasst, die ein Ventilgehäuse mit drei Ventilanschlüssen aufweist, wobei zwischen den drei Ventilanschlüssen zwei Fluidpfade definiert sind, die mittels einem auslenkbaren Ventilglied, das einen Schließkörper aufweist, selektiv aktivierbar oder blockierbar sind. Das Ventilglied umfasst einen Schließkörper, der etwa glockenartig gestaltet ist und verschwenkbar bzw. auslenkbar ist, um in einer ersten Stellung einen ersten Ventilanschluss und einer zweiten Stellung einen zweiten Ventilanschluss zu sperren. Das Ventilglied umfasst neben dem Schließkörper ferner einen Träger, an dem ein Betätigungsabschnitt ausgebildet ist. Der Betätigungsabschnitt kann etwa quer zu seiner Längserstreckung belastet und ausgelenkt werden, um den Schließkörper, ähnlich einer Glocke, zu verschwenken.

Die EP 3 239 572 A1, die EP 2 068 056 A1 sowie die EP 2 365 239 A1 zeigen Ventilanordnungen, die eine hermetische Trennung zwischen einer Ventilkammer, in die die Ventilanschlüsse münden und der Betätigungseinheit ermöglichen. Derartige Ventilanordnungen können auch als mediengetrennte Ventilanordnungen bezeichnet werden. Die hermetische Trennung zwischen der Ventilkammer und der Betätigungseinheit ermöglicht die Nutzung der Ventilanordnungen im medizinischen und/oder analytischen Umfeld.

Generell besteht ein Bedürfnis an kompakt gestalteten Ventilanordnungen, die möglichst wenig Bauraum beanspruchen. Gleichwohl soll dies nach Möglichkeit keine Abstriche bei der Leistungsfähigkeit der Ventilanordnungen mit sich bringen. Dies betrifft insbesondere die möglichen Druckbereiche und/oder Durchflussbereiche, die mit den Ventilanordnungen sicher geschaltet werden können und/oder steuerbar sind.

Ferner besteht ein Bedarf an kompakt gestalteten Ventilanordnungen, die eine derartige Funktionalität auch bei sehr hohem Druck bereitstellen können. Dies kann gegebenenfalls sogar Maximaldrücke umfassen, die größer als Druckbereiche sind, die bisher mit bekannten Ventilen der vorgenannten Art abgedeckt werden können. Es ist wünschenswert, wenn Ventile und Ventilanordnungen in derartig hohen Druckbereichen auch bei hoher dynamischer Belastung sicher und zumindest leckagearm oder sogar leckagefrei betrieben werden können.

Vor diesem Hintergrund liegt der Offenbarung die Aufgabe zugrunde, eine Vorrichtung zur Durchflussregelung eines Fluids und eine damit versehene Ventilanordnung anzugeben, die auch bei hohen Drücken mit hoher Dynamik/hohen Schaltfrequenzen sicher und zuverlässig betreibbar sind. Nach Möglichkeit ist die Vorrichtung zur leckagearmen oder sogar zur leckagefreien Durchflussregelung gestaltet. Vorzugsweise ist die Vorrichtung mediengetrennt gestaltet, so dass ein Übertritt und/oder Austritt des Fluids/Mediums aus der Fluidkammer auch bei hohem Druck spürbar reduziert oder sogar vollständig vermieden werden kann. Nach Möglichkeit soll eine Ventilanordnung, die mit einer derartigen Vorrichtung zur Durchflussregelung versehen ist, einen erweiterten Einsatzbereich abdecken, insbesondere im Hinblick auf zu regelnde Druckbereiche und/oder Durchflussmengen. Grundsätzlich sollen die Vorrichtung und die damit versehene Ventilanordnung kompakt und platzsparend gestaltet sein.

Diese Aufgabe wird bei einer Vorrichtung gemäß der vorgenannten Art erfindungsgemäß dadurch gelöst, dass das Ventilglied bei der Bewegung des Schließkörpers zur Deformationsminimierung in einem Durchtrittsbereich der Dichtung, durch den sich der zumindest eine Verbindungssteg erstreckt, ausgebildet ist.

Die Aufgabe der Erfindung wird auf diese Weise vollständig gelöst.

Erfindungsgemäß wird nämlich darauf Wert gelegt, dass der Durchtrittsbereich der Dichtung, also derjenige Bereich, in dem der Verbindungssteg eine Verbindung zwischen der Ventilkammer bzw. einem Innenraum der Ventilkammer und einem Außenraum, in dem die Betätigung erfolgt, besonders abgedichtet ist. Es wurde nämlich erkannt, dass etablierte Lösungen insbesondere bei hohen Drücken und hohen Schaltfrequenzen zu Undichtigkeiten neigen können.

Eine Ursache hierfür kann darin liegen, dass das Ventilglied ähnlich einer Wippe gestaltet ist, dass also ein Betätigungsabschnitt des Ventilglieds, auf den die Betätigungseinheit einwirkt, über ein gehäuseseitiges Lagerstück abrollt bzw. abwälzt. Dies führt jedoch dazu, dass eine (momentane) Schwenkachse des - üblicherweise flach gestalteten - Betätigungsabschnitts mit der zugewandten Oberfläche des Betätigungsabschnitts zusammenfällt. Jedoch ist das Ventilglied häufig derart gestaltet, dass besagte Oberfläche des Betätigungsabschnitts (im neutralen Zustand des Ventilglieds) von einer Mittelebene/Zentralebene durch die Dichtung bzw. den Verbindungssteg parallel beabstandet ist. Dies führt jedoch häufig dazu, dass eben der Verbindungssteg nicht um seine Längsachse verschwenkt wird, welche regelmäßig mit der Mittelebene/Zentralebene durch die Dichtung zusammenfällt. Stattdessen wird der Verbindungsstegs häufig um eine zu seiner Längsachse beabstandete Schwenkebene verschwenkt. Dies führt jedoch zu größeren Auslenkungen/Bewegungen des Verbindungsstegs. Dies führt wiederum zu erhöhten Deformationen im Durchtrittsbereich der Dichtung. Auf diese Weise kann es zu Leckagen kommen.

Da jedoch nun die Vorrichtung in bzw. bei dem Bereich, in dem der Verbindungssteg die Dichtung durchragt, derart gestaltet ist, dass die Dichtung weniger stark deformiert wird, wenn das Ventilglied betätigt wird, sinkt die Wahrscheinlichkeit für Leckagen.

Dies führt in beispielhaften Ausgestaltungen dazu, dass die Ventilvorrichtung auch für hohe Drücke (bspw. oberhalb von 10 bar) geeignet ist. Es sind beispielhafte Ausgestaltungen vorstellbar, bei denen die Ventilvorrichtung für Drücke bis 50 bar oder sogar höher geeignet ist. Dies umfasst auch einen sicheren und leckageamen Betrieb bei hoher Dynamik/Schaltfrequenz. Damit erweitert sich der Einsatzbereich solcher Ventile deutlich.

Ein Ansatz zur Reduzierung von Leckagen kann darin bestehen, einen etwaigen Abstand zwischen der tatsächlichen Schwenkachse des Betätigungsabschnitts des Ventilglieds und der Längsachse durch den Verbindungssteg zu minimieren. Wenn nämlich der Verbindungssteg um seine Längsachse verschwenkt wird, so verringern sich die Deformationen der Dichtung.

Ein weiterer Ansatz zur Reduzierung von Leckagen kann darin bestehen, den Verbindungssteg und den Durchtrittsbereich der Dichtung hinsichtlich ihrer Querschnitte derart zu gestalten, dass scharfe Ecken bzw. Kanten vermieden und möglichst durch runde Konturen ersetzt werden. Wenn also der Verbindungssteg beispielsweise im Bereich der Dichtung einen runden/zylindrischen oder zumindest abgerundeten Querschnitt hat, und wenn möglichst der Durchtrittsbereich der Dichtung daran angepasst ist, dann gibt es bei der Schwenkbewegung des Verbindungsstegs im Durchtrittsbereich. eine günstige Anschmiegung zwischen Verbindungssteg und Durchtrittsbereich. Es gibt im Ergebnis weniger Lücken bzw. eine homogenere Pressung zwischen Dichtung und Verbindungssteg. Auch dies führt zu geringerer Leckageneigung.

Vor diesem Hintergrund wird die Aufgabe der Erfindung gemäß einem weiteren Aspekt bei einer Vorrichtung gemäß der eingangs genannten Art dadurch gelöst, dass der zumindest eine Verbindungssteg zumindest im Durchtrittsbereich einen runden Querschnitt aufweist.

Eine derartige Gestaltung stellt auch für sich genommen einen Gegenstand dar, der unabhängig von anderen der hierin offenbarten Aspekten und Ausgestaltungen verfolgt und beansprucht werden kann.

Dieser Aspekt führt zu einer Gestaltung, bei der günstige Kontaktverhältnisse zwischen dem Verbindungssteg und der Dichtung vorliegen. Insbesondere gibt es kaum scharfe Kanten/Ecken, so dass auch bei einer Schwenkbewegung des Ventilglieds und folglich des Verbindungsstegs die Dichtung hinreichend gut abdichten kann.

Gemäß einem weiteren Aspekt wird die Aufgabe der Erfindung bei einer Vorrichtung gemäß der eingangs genannten Art dadurch gelöst, dass das Ventilglied bei der Betätigung durch die Betätigungseinheit um eine Schwenkachse verschwenkbar ist, und dass die Schwenkachse in Richtung einer Mittelebene durch die Dichtung versetzt ist. Der Versatz der Schwenkachse in Richtung auf die Mittelebene kann durch eine Kröpfung bzw. entsprechende Ausnehmungen im Bereich des Betätigungsabschnitts im Ventilglied realisiert werden. Wenn sich also die Schwenkachse des Ventilglieds in Bezug auf das Ventilgehäuse und die Längsachse durch den Verbindungssteg (die zumindest in beispielhafte Ausgestaltungen in der Mittelebene liegt) annähern, so verringert sich der Umfang der absoluten Bewegung des Verbindungsstegs beim Umschalten der Vorrichtung.

Eine derartige Gestaltung stellt auch für sich genommen einen Gegenstand dar, der unabhängig von anderen der hierin offenbarten Aspekten und Ausgestaltungen verfolgt und beansprucht werden kann.

Dieser Aspekt führt zu einer Gestaltung, bei der sich die Schwenkachse des Ventilglieds und die Längsachse durch den Verbindungssteg, der die Dichtung durchragt, aneinander annähern. Dies führt bei der Schwenkbewegung des Ventilglieds zu einer reduzierten Bewegung des Verbindungsstegs im Durchtrittsbereich und folglich zu geringeren Deformationen.

Gemäß einem weiteren Aspekt wird die Aufgabe der Erfindung bei einer Vorrichtung gemäß der eingangs genannten Art dadurch gelöst, dass das Ventilglied zumindest einen Lagerabschnitt mit rundem Querschnitt aufweist, der dem Betätigungsabschnitt benachbart ist, und dass der zumindest eine Lagerabschnitt ein Bestandteil des Verbindungsstegs an einer dem Schließkörper zugewandten Seite des Betätigungsabschnitts oder eine Fortsetzung des Verbindungsstegs an einer vom Schließkörper abgewandten Seite des Betätigungsabschnitts ist.

Eine derartige Gestaltung stellt auch für sich genommen einen Gegenstand dar, der unabhängig von anderen der hierin offenbarten Aspekten und Ausgestaltungen verfolgt und beansprucht werden kann.

Dieser Aspekt führt zu einer Gestaltung, bei der am Ventilglied ein Lagerabschnitt mit rundem Querschnitt vorgesehen ist, dessen Längsachse die Schwenkachse des Ventilglieds definiert. Die Längsachse des Lagerabschnitts fällt vorzugsweise mit der Längsachse durch den Verbindungssteg zusammen. Mit anderen Worten ist der Lagerabschnitt beispielsweise in einem Teilbereich des Verbindungsstegs ausgebildet. Gemäß einer weiteren beispielhaften Ausführungsform ist der Lagerabschnitt eine Art Fortsetzung des Verbindungsstegs nach außen (weg vom Schließkörper).

Es versteht sich, dass diese Aspekte in Kombination nutzbar sind. Gleichwohl ergibt sich bereits in Alleinstellung ein Beitrag zur Lösung der Aufgabe der vorliegenden Offenbarung. Eine Gestaltung gemäß diesen Aspekten kann dazu beitragen, Deformationen der Dichtung im Durchtrittsbereich bei der Bewegung des Schließkörpers bzw. des Ventilglieds zu minimieren.

Die Vorrichtung kann insbesondere als 3/2-Wegeventil gestaltet sein. Es ist grundsätzlich auch vorstellbar, die Vorrichtung als 2/2-Wegeventil zu gestalten. Die Vorrichtung kann als Ventil mit Umsteuerfunktion/Umschaltfunktion gestaltet sein.

In einer beispielhaften Ausgestaltung erstreckt sich zwischen dem Schließkörper und dem Betätigungsabschnitt eine umlaufende Dichtung, die den Schließkörper und den Betätigungsabschnitt hermetisch voneinander trennt. Auf diese Weise kann die hermetische Abdichtung zu Zwecken der Medientrennung bewirkt werden. Der Schließkörper und die umlaufende Dichtung können ein und demselben Formteil zugeordnet sein. Das Formteil kann den zumindest einen Verbindungssteg vollständig umgeben. Üblicherweise wird ein elastisches, hinreichend inertes Material für Schließkörper und/oder Dichtung wendet. Beispielhaft handelt es sich hier um Fluorkautschuk (FKM), Perfluorkautschuk (FFKM), Fluor-Silikon-Kautschuk (FVMQ/MFQ), etc.

Umgebende Bauteile, insbesondere das Ventilgehäuse, welches eine Ventilkammer definiert, sind beispielhaft ebenso aus inerten Materialien hergestellt, etwa aus inerten Kunststoffen, beispielsweise Polyvinylidenfluorid (PVDF), Polyetheretherketon (PEEK), etc. Im Sinne dieser Offenbarung sind inerte Materialien solche Materialien, die im Hinblick auf das zu regelnde Fluidpfad/Medium zumindest hinreichend beständig sind.

Gemäß einer weiteren beispielhaften Ausgestaltung ist das Ventilglied bei der Betätigung durch die Betätigungseinheit um eine Schwenkachse verschwenkbar, wobei die Schwenkachse in Richtung einer Mittelebene durch die Dichtung versetzt ist. Idealerweise liegt die Schwenkachse in oder nahe bei der Mittelebene durch die Dichtung. In beispielhaften Ausgestaltungen ist es angestrebt, die Schwenkachse und die Längsachse durch den Verbindungssteg miteinander auszurichten. In beispielhaften Ausgestaltungen gibt es keinen Versatz zwischen der Schwenkachse und der Längsachse.

Gemäß einer weiteren beispielhaften Ausgestaltung der Vorrichtung sind der Betätigungsabschnitt und/oder der zumindest eine Verbindungssteg gekröpft, um den Versatz der Schwenkachse zu bewirken. Auf diese Weise wird auch bei einer Abwälzbewegung die (momentane) Schwenkachse wie gewünscht versetzt. Die Bewegung des Ventilglieds, insbesondere des Schließkörpers, kann eine Abwälzbewegung/Abrollbewegung des Betätigungsabschnitts relativ zum Ventilgehäuse umfassen. Dies ist dann der Fall wenn kein festes Drehlager gegeben ist, sondern stattdessen eine Abwälzbewegung über ein Lagerstück gegeben ist. Dies umfasst eine Bewegung mit "wandernder" Schwenkachse, also mit einer momentanen Schwenkachse. Alternativ kann die Bewegung des Ventilglieds, insbesondere des Schließkörpers, eine Schwenkbewegung um eine fest definierte Schwenkachse umfassen.

Auf diese Weise kann der gewünschte Versatz der Schwenkachse bzw. deren Annäherung an die Längsachse des Verbindungsstegs bewirkt werden.

Allgemein kann der Versatz der Schwenkachse in Richtung auf die Mittelebene durch eine Kröpfung (des ansonsten eben gestalteten Betätigungsabschnitts bzw. Verbindungsstegs) bewirkt werden. Ferner ist auch das Einbringen einer Einkerbung vorstellbar. Ferner ist es vorstellbar, im Betätigungsabschnitt oder benachbart dazu eine Ausnehmung vorzusehen, um die Schwenkachse in der gewünschten Position anzuordnen.

Es ist vorstellbar, den Betätigungsabschnitt bzw. ein den Betätigungsabschnitt umfassendes Gestell des Ventilglieds zunächst als Halbzeug in Form eines Stanzteils auszuführen, etwa als einteiliges, im Wesentlichen ebenes Stanzteil. Sodann kann durch Umformen der gewünschte Versatz der sich ergebenden Schwenkachse erzeugt werden. Ferner kann ein Umformverfahren genutzt werden, um den Verbindungssteg zumindest teilweise mit rundem/kreisförmigen Querschnitt zu versehen.

Es ist auch vorstellbar, durch ein abtragendes Verfahren ein Gestell bzw. einen Betätigungsabschnitt des Ventilglieds herzustellen. Dies kann beispielhaft einen ersten Schritt zur Herstellung eines Stanzteils und einen Bearbeitungsschritt zur Zeugung der gewünschten Kontur umfassen. Dies kann die Fertigung eines Halbzeugs mittels Ätzen oder durch ein elektrochemisches Verfahren umfassen, wobei in das Halbzeug durch ein anderes Verfahren, etwa ein Umformverfahren und/oder ein abtragendes Bearbeitungsverfahren die gewünschten Konturen (runder Querschnitt und/oder Versatz für Schwenkachse) eingebracht werden.

Es ist auch vorstellbar, das Gestell bzw. den Betätigungsabschnitt des Ventilglieds teilweise oder vollständig durch ein elektrochemisches Herstellverfahren oder ein Ätzverfahren herzustellen. Dies kann also ein Erzeugen eines Halbzeugs in Form eines Grundkörpers umfassen, in den dann über ein Umformverfahren (Prägen, Biegen, Ziehen) der gewünschte Versatz für die Schwenkachse eingebracht wird.

Ferner ist es vorstellbar, den Versatzbereich durch eine Aussparung im Gestell zu bilden, wobei die Aussparung durch ein Ätzverfahren oder ein ähnliches abtragendes Verfahren in ein Halbzeug eingebracht wird. Das Halbzeug kann wiederum mittels Ätzen, Stanzen und/oder weiterer abtragender/trennender Verfahren aus dünnwandigem Material/Blechmaterial gewonnen werden.

Die Gestelle sind also zumindest in einigen Ausführungsformen nicht nur als ebene Teile gestaltet, sondern zumindest abschnittsweise im Bereich des Verbindungsstegs oder der Verbindungsstege mit einem runden Querschnitt und/oder einer Einkerbung/Kröpfung versehen.

Hinsichtlich der Medientrennung sind Ausführungsformen vorstellbar, bei denen eine hermetische Trennung zwischen dem Gestell, insbesondere in Bezug auf dessen Träger und Verbindungssteg(e), und dem Innenraum der Ventilkammer gegeben ist. Beispielsweise sind Träger und Verbindungssteg(e) innerhalb der Ventilkammer vollständig von dem Schließkörper bzw. der Dichtung umschlossen. Mit anderen Worten sind Träger und Verbindungssteg(e) - innerhalb der Ventilkammer - in das elastische Material von Schließkörper bzw. Dichtung eingebettet.

Gemäß einer weiteren beispielhaften Ausgestaltung der Vorrichtung sind der Betätigungsabschnitt und/oder der zumindest eine Verbindungssteg mit einer Einkerbung versehen, um den Versatz der Schwenkachse zu bewirken. Die Einkerbung kann eine Aussparung und/oder eine Kröpfung umfassen. Es ist auch vorstellbar, den Bereich des Verbindungsstegs, der die Dichtung durchragt, relativ zum Betätigungsabschnitt zu versetzen. Es ist auch vorstellbar, den Betätigungsabschnitt zumindest teilweise mit einer Einkerbung/Kröpfung zu versehen.

Gemäß einer weiteren beispielhaften Ausgestaltung der Vorrichtung weist der zumindest eine Verbindungssteg zumindest im Durchtrittsbereich einen runden Querschnitt auf. Dies führt zu einem günstigen Kontaktverhältnis zwischen Verbindungssteg und Dichtung. Auf diese Weise werden Spalte und damit einhergehende Leckagen bei Hochdruck-Anwendungen reduziert oder gar vermieden.

Dies kann einerseits die Dichtwirkung zwischen Verbindungssteg und Dichtung betreffen. Andererseits kann dies die Dichtwirkung zwischen Dichtung und dem zugehörigen Sitz (Aufnahmenut) im Ventilgehäuse betreffen. Auch im letztgenannten Fall können sich Bewegungen des Verbindungsstegs im Durchtrittsbereich auf die Dichtigkeit auswirken.

Gemäß einer weiteren beispielhaften Ausgestaltung der Vorrichtung ist das Ventilglied um eine Schwenkachse verschwenkbar, die einer Mittenachse/Längsachse des zumindest einen Verbindungsstegs im Durchtrittsbereich benachbart ist und vorzugsweise mit dieser zusammenfällt. Wenn es keinen oder nur einen geringen Abstand zwischen der Mittenachse und der Schwenkachse gibt, wird der Umfang der Relativbewegung zwischen dem Verbindungsstegs und dem Durchtrittsbereich bei der Schwenkbewegung des Ventilglieds um die Schwenkachse verringert.

Gemäß einer weiteren beispielhaften Ausgestaltung der Vorrichtung ist eine Schwenkachse (oder die Schwenkachse) des Ventilglieds durch den zumindest einen Verbindungssteg und ein korrespondierendes Lagerstück am Ventilgehäuse definiert. Dies umfasst gemäß beispielhaften Ausführungsformen ein Zusammenfallen der Längsachse durch den Verbindungssteg und der Schwenkachse. Mit anderen Worten dient der Verbindungssteg in beispielhaften Ausgestaltungen zunächst abschnittsweise auch als Lagerelement für das Ventilglied. In einer beispielhaften Ausgestaltung ist demgemäß der Verbindungssteg in dem Bereich, der für eine Lagerfunktion genutzt wird, mit einem runden Querschnitt versehen. Wenn dann am Ventilgehäuse eine entsprechende Aufnahme vorgesehen ist, kann eine fixe Schwenkachse definiert werden, um die das Ventilglied (zumindest der Betätigungsabschnitt und der damit verbundene Schließkörper) verschwenkbar ist. Wenn diese Schwenkachse mit der Längsachse/Mittenachse des Verbindungsstegs zusammenfällt, gibt es im Durchtrittsbereich durch die Dichtung nur geringe Relativbewegungen zwischen Verbindungssteg und Dichtung.

Gemäß einer weiteren beispielhaften Ausgestaltung der Vorrichtung ist der Verbindungssteg zumindest in einem mit einem runden Querschnitt versehenen Lagerabschnitt im Lagerstück am Ventilgehäuse geführt. Das Lagerstück kann also eine Aufnahme für den Lagerabschnitt bereitstellen. Damit wird die Schwenkachse definiert.

Diese Gestaltung ist eine Abkehr von der reinen Wippenfunktion, bei der ein Betätigungsabschnitt des Ventilglieds an einem Lagerstück am Ventilgehäuse abrollt. Bei dieser Gestaltung "wandert" die Schwenkachse, es gibt also je nach Stellung des Ventilglieds unterschiedliche momentane Schwenkachsen.

Gemäß einer weiteren beispielhaften Ausgestaltung der Vorrichtung ist an einer vom Schließkörper abgewandten Seite des Betätigungsabschnitts ein Fortsatz des Verbindungsstegs ausgebildet, wobei der Fortsatz in der Aufnahme am Ventilgehäuse geführt und mit einem runden Querschnitt versehen ist. Der Fortsatz kann demgemäß auch als Lagerabschnitt dienen bzw. bezeichnet werden. Der Fortsatz kann mit einer entsprechenden Aufnahme zusammenwirken, damit eine günstige Schwenkachse definiert wird. Der Fortsatz ist in einer beispielhaften Ausgestaltung aus Sicht des Schließkörpers an der Außenseite des Betätigungsabschnitts angeordnet und vom Schließkörper abgewandt.

Gemäß einer weiteren beispielhaften Ausgestaltung der Vorrichtung ist der Betätigungsabschnitt Teil eines Betätigungsrahmens, der den Schließkörper umgibt, wobei sich zwei einander gegenüberliegende Verbindungsstege zwischen dem Betätigungsrahmen und dem Schließkörper erstrecken. Diese Gestaltung verringert Seitenkräfte. Die Betätigungskraft wird günstiger verteilt. Wenn es zwei einander gegenüberliegende Verbindungsstege gibt, können demgemäß auch zwei Lagerstellen für die Schwenkbewegung gebildet werden. Je weiter die beiden Lagerstellen voneinander entfernt sind, desto genauer kann die Schwenkachse definiert und die Schwenkbewegung geführt werden.

Der Betätigungsrahmen kann auch als Rahmen oder Rahmenteil bzw. als Randstück bezeichnet werden. Wenn der Betätigungsrahmen den Schließkörper umgibt, erhöht sich die Steifigkeit des Ventilglieds. Damit wird eine direkte und genaue Ansteuerung unterstützt. Der Betätigungsrahmen ist oval oder langlochartig mit umlaufendem Rand gestaltet.

Gemäß einer weiteren beispielhaften Ausgestaltung der Vorrichtung weist das Ventilglied einen Träger auf, wobei der Träger, der zumindest eine Verbindungssteg und der Betätigungsabschnitt fest miteinander verbunden sind und/oder Teil eines einstückig gestalteten Gestells sind. In einer beispielhaften Ausführungsform ist der Träger einstückig als im Wesentlichen flaches Bauteil gestaltet. Das Gestell kann etwa mittels Stanzen, Ätzen und/oder einem anderen abtragenden und/oder trennenden Verfahren hergestellt werden. Konturen, die für die gewünschte Verlagerung der Schwenkachse in Richtung auf die Mittenachse des Verbindungsstegs eingebracht werden, können über geeignete Umformverfahren und/oder abtragende Verfahren erzeugt werden.

Der Träger und der Betätigungsrahmen des Gestells können sich im Wesentlichen in einer Ebene erstrecken. Der Träger und der Betätigungsrahmen sind beispielhaft mit ihren Längsseiten in einer gemeinsamen Ebene zueinander ausgerichtet. Der Träger weist beispielhaft zwei Enden auf, die jeweils einem Dichtungsabschnitt des Schließkörpers zugeordnet sind. Ein Abstand zwischen den beiden Enden definiert eine Längserstreckung der Trägers und des Ventilglieds, zumindest in beispielhaften Ausführungsformen. In einem Ausführungsbeispiel koppeln zwei Verbindungsstege in einem Zwischenbereich zwischen den beiden Enden an den Träger an, um den Träger und den Betätigungsrahmen miteinander zu verbinden.

In einer beispielhaften Ausgestaltung umfasst das Gestell den Betätigungsrahmen, der den Träger umgibt, wobei der Träger in einem durch den Betätigungsrahmen definierten Innenbereich ausgebildet ist, und wobei der Träger über zwei Verbindungsstege mit dem Betätigungsrahmen verbunden ist. Die beiden Verbindungsstege sind in einer beispielhaften Ausführungsform seitlich vom Träger angeordnet. Die beiden Verbindungsstege können gemeinsam eine Längsachse/Mittenachse definieren, welche parallel zur Schwenkachse des Ventilglieds ist. In beispielhaften Ausführungsformen fällt die Schwenkachse des Ventilglieds mit der Längsachse durch die Verbindungsstege zusammen.

Gemäß einer weiteren beispielhaften Ausgestaltung der Vorrichtung definieren zumindest der Träger oder der Betätigungsrahmen mit ihrer Längserstreckung die Mittelebene. Gemäß dieser Ausgestaltung ist das Gestell zumindest im Wesentlichen flach gestaltet. Eine mittige Ebene (die die Dicke des Flachstücks in zwei gleich dicke Unterabschnitte teilt) durch dieses Flachstück bildet in dieser Ausgestaltung die Mittelebene. Die Mittelebene entspricht zumindest in beispielhaften Ausgestaltungen ebenso einer mittigen Ebene durch die Längserstreckung der Dichtung. Gemäß weiteren beispielhaften Ausgestaltungen wird die Mittelebene zumindest durch die flächige Erstreckung des Trägers definiert. Gemäß weiteren beispielhaften Ausgestaltungen wird die Mittelebene zumindest durch die flächige Erstreckung des Schließkörpers definiert. Gemäß weiteren beispielhaften Ausgestaltungen wird die Mittelebene zumindest durch die flächige Erstreckung der Dichtung definiert.

Gemäß einer weiteren beispielhaften Ausgestaltung der Vorrichtung weist das Ventilglied zumindest einen Lagerabschnitt mit rundem Querschnitt auf, der dem Betätigungsabschnitt benachbart ist, wobei der zumindest eine Lagerabschnitt ein Bestandteil des Verbindungsstegs an einer dem Schließkörper zugewandten Seite des Betätigungsabschnitts oder eine Fortsetzung des Verbindungsstegs an einer vom Schließkörper abgewandten Seite des Betätigungsabschnitts ist.

Der Lagerabschnitt ist also in beispielhaften Ausgestaltungen ein Unterabschnitt des Verbindungsstegs oder der Verbindungsstege. Demgemäß ist das Ventilglied bei umlaufendem Rahmen in einem Bereich zwischen zwei Schenkeln des Rahmens am Ventilgehäuse gelagert. In diesem Bereich sind beispielsweise zwei Verbindungsstege angeordnet, die den Rahmen mit dem Träger verbinden.

Gemäß einer alternativen Ausgestaltung ist das Ventilglied über zwei Zapfen am Ventilgehäuse gelagert, die außerhalb des umlaufenden Rahmens als Fortsetzung der (innerhalb des umlaufenden Rahmens ausgebildeten) Verbindungsstege gestaltet sind.

Gemäß einer weiteren beispielhaften Ausgestaltung der Vorrichtung umfasst das Ventilgehäuse drei Ventilanschlüsse, wobei im Ventilgehäuse zwei Fluidpfade ausgebildet sind, die sich zwischen den drei Ventilanschlüssen erstreckt, wobei die Vorrichtung ferner zwei Ventilsitze aufweist, von denen je einer einem der zwei Fluidpfade zugeordnet ist, wobei der Schließkörper zwei Dichtungsabschnitte aufweist, von denen je einer einem der beiden Ventilsitze zugeordnet ist, und wobei das Ventilglied verschwenkbar ist, um wechselseitig einen der beiden Ventilsitze freizugeben oder zu sperren. Mit anderen Worten ist das Ventil zumindest in beispielhaften Ausgestaltungen als 3/2-Wegeventil mit Umsteuerfunktion gestaltet.

Die Aufgabe der Erfindung wird ferner durch eine Ventilanordnung gelöst, die eine Vorrichtung zur Durchflussregelung gemäß zumindest einer der hierin beschriebenen Ausführungsformen umfasst. Beispielhaft ist eine solche Ventilanordnung als Sitzventilanordnung, Flapper-Ventilanordnung, Membran-Ventilanordnung oder als Trennhebel-Ventilanordnung ausgeführt. Kombinationen daraus sind denkbar.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine geschnittene Seitenansicht durch eine Ausführungsform einer Ventilanordnung;
- Fig. 2: eine perspektivische Teilansicht der Anordnung gemäß Fig. 1, wobei aus Veranschaulichungsgründen Elemente der Ventilanordnung ausgeblendet sind;
- Fig. 3: eine perspektivische Teilansicht eines Ventilglieds zur Verwendung bei der in Fig. 1 und Fig. 2 gezeigten Ventilanordnung;
- Fig. 4: eine explodierte perspektivische Teilansicht der in den Figuren 1 bis 4 veranschaulichten Ventilanordnung, wobei aus Veranschaulichungsgründen Elemente der Ventilanordnung ausgeblendet sind;
- Fig. 5: eine Draufsicht auf eine Ausführungsform eines Ventilglieds zur Verwendung bei einer Ventilanordnung;
- Fig. 6: eine seitliche Ansicht des Ventilglieds gemäß Fig. 5 zur Veranschaulichung einer Schwenkbewegung;
- Fig. 7: eine Schnittansicht des Ventilglieds gemäß Fig. 5 entlang der Linie VII-VII in Fig. 5 in einer ersten Schaltstellung;
- Fig. 8: eine weitere Ansicht der Anordnung gemäß Fig. 7 in einer zweiten Schaltstellung des Ventilglieds;
- Fig. 9: eine vereinfachte seitliche Ansicht einer Ausführungsform eines Ventilglieds zur Veranschaulichung einer Gestaltung eines Verbindungsstegs und eines Lagerstücks;
- Fig. 10: eine vereinfachte seitliche Ansicht einer gegenüber der Darstellung in Fig. 9 abgewandelten Ausführungsform eines Ventilglieds;
- Fig. 11: eine vereinfachte seitliche Ansicht einer weiteren gegenüber der Darstellung in Fig. 9 abgewandelten Ausführungsform eines Ventilglieds;
- Fig. 12: eine perspektivische explodierte Darstellung einer weiteren Ausführungsform eines Ventilglieds;
- Fig. 13: eine vereinfachte seitliche Ansicht des Ventilglieds gemäß Fig. 12;
- Fig. 14: eine perspektivische explodierte Darstellung einer weiteren Ausführungsform eines Ventilglieds;
- Fig. 15: eine vereinfachte seitliche Ansicht des Ventilglieds gemäß Fig. 14;
- Fig. 16: eine perspektivische explodierte Darstellung einer weiteren Ausführungsform eines Ventilglieds;
- Fig. 17: eine vereinfachte seitliche Ansicht des Ventilglieds gemäß Fig. 16;
- Fig. 18: eine perspektivische explodierte Darstellung einer weiteren Ausführungsform eines Ventilglieds;
- Fig. 19: eine vereinfachte seitliche Ansicht des Ventilglieds gemäß Fig. 18; und
- Fig. 20: eine vereinfachte seitliche Ansicht einer gegenüber der Darstellung in Fig. 19 abgewandelten Ausführungsform eines Ventilglieds.

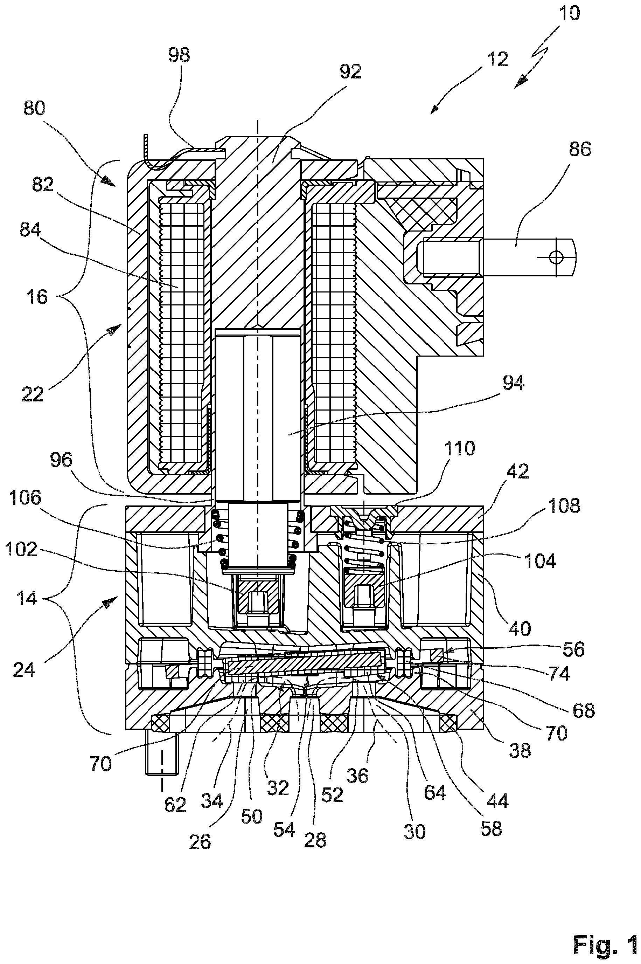

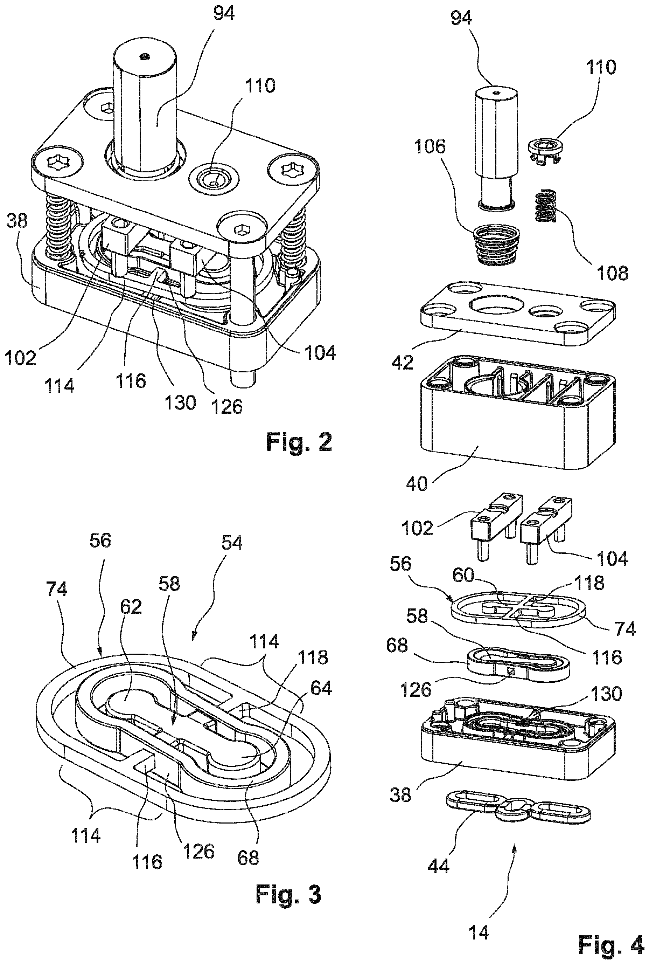

Fig. 1 veranschaulicht anhand einer perspektivischen Darstellung eine beispielhafte Ausführungsform einer insgesamt mit 10 bezeichneten Ventilanordnung. Das Ausführungsbeispiel der Ventilanordnung 10 wird ergänzend in den Figuren 2 bis 5 veranschaulicht. Es versteht sich, dass die Ventilanordnung 10 auch anderweitig gestaltet sein kann. Insofern sind konstruktive Details, die im Folgenden zu Veranschaulichungszwecken erläutert werden, nicht einschränkend zu verstehen. Eine beispielhafte Ausgestaltung der Ventilanordnung 10 wird mit Bezugnahme auf Fig. 1 und mit ergänzendem Bezug auf die Figuren 2 bis 4 veranschaulicht.

Es versteht sich, dass Einzelmerkmale der nachfolgend veranschaulichten beispielhaften Ausführungsformen auch in anderer Weise miteinander kombiniert werden können, also auch bei anderen Ausführungsformen verwendbar sind. Dies gilt besonders für Detailgestaltungen zur Minimierung der Leckageanfälligkeit und folglich zur Optimierung der Hochdruck-Eignung der Ventilanordnung 10.

Die Ventilanordnung 10 umfasst eine Vorrichtung 12 zur Durchflussregelung. Die Vorrichtung 12 kann auch als Ventil oder Ventileinheit bezeichnet werden. Die Vorrichtung 12 umfasst einen Ventilabschnitt 14 und einen Betätigungsabschnitt 16. In der gezeigten beispielhaften Ausführungsform gibt es eine bauliche Abgrenzung zwischen dem Betätigungsabschnitt 16 und dem Ventilabschnitt 14. Der Betätigungsabschnitt 16 umfasst ein Betätigungsgehäuse 22. Der Ventilabschnitt 14 umfasst ein Ventilgehäuse 24.

Die Vorrichtung 12 weist in der beispielhaften Ausgestaltung als 3/2-Wegeventil gemäß den Figuren 1 bis 4 drei Anschlüsse 26, 28, 30 auf, die in eine Ventilkammer 32 münden. In einer beispielhaften Ausgestaltung als Ventil mit hermetischer Medientrennung ist die Ventilkammer 32 gegenüber der Umgebung abgedichtet, insbesondere auch gegenüber der Betätigungseinheit 16. Die drei Anschlüsse 26, 28, 30 definieren zwei Ventilpfade 34, 36. Der Ventilpfad 34 verbindet die Anschlüsse 26 und 28. Der Ventilpfad 36 verbindet die Anschlüsse 28 und 30. Die Ventilpfade 34, 36 erstrecken sich durch die Ventilkammer 32.

Das Ventilgehäuse 24 ist in der beispielhaften Ausgestaltung gemäß den Figuren 1 bis 4 mehrteilig gestaltet. Dies umfasst in einem Ausführungsbeispiel ein Gehäuseteil 38, ein weiteres Gehäuseteil 40 sowie einen Deckel 42, vergleiche auch Fig. 4. Das Gehäuseteil 40 ist zwischen dem Gehäuseteil 38 und dem Deckel 42 angeordnet. Der Deckel 42 schließt das Ventilgehäuse 24 in Richtung auf die Betätigungseinheit 16 ab. Mit Bezug auf die Orientierung in Fig. 1 kann das Gehäuseteil 38 zumindest in dem gezeigten Ausführungsbeispiel als unteres Gehäuseteil bezeichnet werden. Demgemäß kann das Gehäuse Teil 40 als oberes Gehäuseteil bezeichnet werden. Ferner veranschaulicht Fig. 4 in Zusammenschau mit Fig. 1 eine Dichtung 44 für die Anschlüsse 26, 28, 30.

Im Ventilgehäuse 24, insbesondere in dem Gehäuseteil 38 sind zwei Ventilsitze 50, 52 ausgebildet. Der erste Ventilsitz 50 ist dem Pfad 34 zugeordnet. Der zweite Ventilsitz 52 ist dem Pfad 36 zugeordnet. Die Vorrichtung 12 umfasst ein im Ventilgehäuse 24 angeordnetes Ventilglied 54, welches wechselseitig mit dem ersten Ventilsitz 50 und dem zweiten Ventilsitz 52 koppelbar ist, um wechselseitig einen der beiden Pfade 34, 36 zu sperren oder freizugeben. Fig. 3 zeigt eine perspektivische Einzeldarstellung des Ventilglieds 54.

Das Ventilglied 54 umfasst ein Gestell 56, vergleiche auch Fig. 4. Das Gestell 56 ist beispielhaft aus einem Flachmaterial, etwa einem Blechmaterial gestaltet. Das Gestell 56 ist in der in den Figuren 1 bis 4 veranschaulichten Ausführungsform das Koppelglied zwischen der Betätigungseinheit 16 und der gewünschten Stellung des Ventilglieds 54 zum Öffnen oder Schließen der Pfade 34, 36.

Das Ventilglied 54 umfasst neben dem Gestell 56 einen Schließkörper 58. Das Gestell 56 weist einen Träger 60 auf, der in den Schließkörper 56 eingebettet ist und diesen trägt. Der Schließkörper 58 ist aus einem hinreichend elastischen Material gefertigt, wobei das elastische Material vorzugsweise medienbeständig (in Bezug auf die Verwendung mit dem geplanten Fluid) ist. Am Schließkörper 58 ist ein erster Dichtungsabschnitt 62 für den ersten Ventilsitz 50 ausgebildet. Am Schließkörper 58 ist ferner ein zweiter Dichtungsabschnitt 64 für den zweiten Ventilsitz 52 ausgebildet. Der Dichtungsabschnitt 62 kann den Ventilsitz 50 sperren. Der Dichtungsabschnitt 64 kann den Ventilsitz 52 sperren. In der in Fig. 1 gezeigten Schaltstellung kontaktiert der Dichtungsabschnitt 62 im Bereich des Ventilsitzes 50 das Ventilgehäuse 24, so dass der Pfad 34 gesperrt ist. Hingegen ist in dieser Stellung der Pfad 36 freigegeben, da der Dichtungsabschnitt 64 vom Ventilsitz 52 abgehoben ist. Zwischen den Anschlüssen 28 und 30 kann sich eine Fluidströmung einstellen.

Fig. 3 und Fig. 4 zeigen, dass der Schließkörper 58 ferner mit einer umlaufenden Dichtung 68 versehen oder mit dieser gekoppelt ist. Zumindest in beispielhaften Ausgestaltungen ist der Schließkörper 58 mit der Dichtung 68 und den Dichtungsabschnitt 62, 64 integral und einstückig gestaltet. Dies impliziert, dass die Dichtung 68 und die Dichtungsabschnitt der 62, 64 aus demselben Material gestaltet sind.

Die umlaufende Dichtung 68 kann auch als Gehäusedichtung bezeichnet werden. Die Dichtungsabschnitte 62, 64 können auch als Sitzdichtungen bezeichnet werden. In der in den Figuren 1 bis 4 veranschaulichten Ausführungsform weist das Ventilgehäuse 24 zwischen dem Gehäuseteil 38 und dem Gehäuseteil 40 eine Aufnahme 70 für die Dichtung 68 auf. Die Aufnahme 70 umfasst beispielhaft beim Gehäuseteil 38 eine erste Nut und beim Gehäuseteil 40 eine zweite Nut, wobei die beiden Nuten miteinander korrespondieren und zwischen sich die Dichtung 68 aufnehmen. Andere Gestaltungen sind denkbar.

Am Gestell 56 des Ventilglieds 54 ist ferner ein Betätigungsrahmen oder Rahmen 74 ausgebildet. Der Rahmen 74 umläuft bzw. umschließt den Träger 60. Zwischen dem Rahmen 74 und dem Träger 60 ist die Dichtung 68 angeordnet. Die Dichtung 68 umläuft bzw. umschließt den Träger 60. Der Rahmen 74 umläuft bzw. umschließt die Dichtung 68.

Fig. 1 veranschaulicht ferner eine beispielhafte Ausgestaltung der Betätigungseinheit 16. Das Gehäuse 22 der Betätigungseinheit 16 beherbergt einen Elektromagneten 80, der allgemein auch als Aktuator bezeichnet werden kann. Der Elektromagnet 80 weist ein Joch 82 und eine Spule 84 auf. In Fig. 1 ist mit 86 ein Anschluss für die Spule 84 angedeutet. Es versteht sich, dass es zumindest zwei Anschlüsse 86 für die Spule 84 gibt. Der Elektromagnet 80 weist ferner ein festes Ankerteil 92 und ein bewegliches Ankerteil 94 auf. Das bewegliche Ankerteil 94 ist relativ zum festen Ankerteil 92 in einer Hülse 96 verfahrbar. Auf diese Weise kann der Elektromagnet 80 einen Hub bewirken, über den das Ventilglied 54 des Ventilabschnitts 14 gesteuert werden kann. In Fig. 1 ist ferner mit 98 eine Befestigung angedeutet, die das feste Ankerteil 92 gegen das Joch 82 verspannt.

Das bewegliche Ankerteil 94 ist mit einem Betätigungselement 102 gekoppelt. Das Betätigungselement 102 wird in der in den Figuren 1 bis 4 gezeigten Darstellung mittig vom beweglichen Ankerteil 94 angesteuert. Das Betätigungselement 102 weist zwei zueinander beanstandete Schenkel auf, die bedarfsweise auf den Rahmen 74 einwirken, um das Ventilglied 54 zu steuern. Das über den Elektromagneten 80 steuerbare Betätigungselement 102 ist dem ersten Dichtungsabschnitt 62 und dem ersten Ventilsitz 50 zugeordnet. Ferner ist bei der Vorrichtung 12 ein zweites Betätigungselement 104 vorgesehen, welches nicht direkt durch den Elektromagnet 80 angesteuert wird. Das zweite Betätigungselement 104 ist dem zweiten Dichtungsabschnitt 64 und dem zweiten Ventilsitz 52 zugeordnet. Für das Betätigungselement 102 ist eine Rückstellfeder 106 vorgesehen. Für das Betätigungselement 104 ist eine Rückstellfeder 108 vorgesehen. In Fig. 2 und Fig. 4 ist ferner ein mit 110 bezeichneter Stopfen gezeigt, der die Lage der Rückstellfeder 108 am Ventilgehäuse 24 sichert.

Wenn das bewegliche Ankerteil 94 des Elektromagneten 80 in Richtung auf das feste Ankerteil 92 angezogen ist, drängt das Betätigungselement 102 den Dichtungsabschnitt 62 nicht mehr auf den Ventilsitz 50. Stattdessen wirkt die Kraft der Rückstellfeder 108 auf das Betätigungselement 104, um den Dichtungsabschnitt 64 in Richtung auf den Ventilsitz 52 zu drängen. Damit geht einher, dass der Dichtungsabschnitt 62 vom Ventilsitz 50 abgehoben wird.

Den Figuren 2 bis 4 kann ferner entnommen werden, dass zumindest bei dem gezeigten Ausführungsbeispiel am Rahmen 74 des Gestells 56 des Ventilglieds 54 ein Betätigungsabschnitt 114 vorgesehen ist. Der Betätigungsabschnitt 114 ist derjenige Bereich des Rahmens 74 bzw. des Gestells 56, in dem das Betätigungselement 102 oder das Betätigungselement 104 auf das Ventilglied 54 einwirken können. Beispielhaft sind am Rahmen 74 auf gegenüberliegenden Seiten zwei Betätigungsabschnitte 114 vorgesehen, auf die Betätigungselemente 102, 104 mit ihren Schenkeln einwirken können.

Zwischen dem Rahmen 74 und dem Träger 60 des Gestells 56 erstreckt sich zumindest ein Verbindungssteg 116, 118. In der beispielhaften Ausgestaltung gemäß den Figuren 1 bis 4 sind zwei einander gegenüberliegende Verbindungsstege 116, 118 vorgesehen, die auf einander gegenüberliegenden Seiten des Trägers 60 angeordnet sind und sich auf jeder der beiden Seiten zwischen dem Träger 60 und dem Rahmen 74 erstrecken. Die Verbindungsstege 116, 118 verbinden den Träger 60 mit dem Rahmen 74, insbesondere mit dem Betätigungsabschnitt 114. Demgemäß werden Bewegungen (Schwenkbewegungen) bei der Betätigung des Rahmens 74 über die Verbindungsstege 116, 118 zu dem Träger 60 und folglich zu dem daran aufgenommenen Schließkörper 58 mit den Dichtungsabschnitten 62, 64 übertragen.

Fig. 3 und Fig. 4 veranschaulichen ferner, dass in diesem Ausführungsbeispiel die Verbindungsstege 116, 118 die Dichtung 68 in einem Durchtrittsbereich 126 durchragen. Auf diese Weise ermöglicht die Dichtung 68 die gewünschte hermetische (fluidische) Trennung zwischen Ventilkammer 32 und der Betätigungseinheit 16 und sogar den Betätigungselementen 102, 104. Jedoch erlauben die Verbindungsstege 116, 118 eine Bewegungsübertragung/Momentenübertragung ausgehend vom Betätigungsabschnitt 114 in Richtung auf den Träger 60 und folglich den Schließkörper 58. Diese Übertragung erfolgt im Durchtrittsbereich 126 durch die (idealerweise vollständig oder nahezu vollständig abdichtende) Dichtung 68 hindurch. Bei der Bewegung des Ventilglieds 54 entsteht folglich eine Relativbewegung zwischen den Verbindungssteg 116, 118 und der Dichtung 68. Fig. 3 zeigt, dass die Verbindungstege 116, 118 zwischen dem Rahmen 74 und dem Träger 60 in das Material des Schließkörpers 58 eingebettet sind.

Fig. 2 und Fig. 4 veranschaulichen ferner, dass am Ventilgehäuse 24, beispielsweise am Gehäuseteil 38, ein Aufnahmestück oder Lagerstück 130 für das Ventilglied 54 vorgesehen ist. Die Lage des Ventilglieds 54 im Ventilgehäuse 24 kann zum einen über die Anordnung/Gestaltung der Dichtung 68 und der zugehörigen Aufnahme 70 am Ventilgehäuse 24 definiert werden. Jedoch bedarf es ferner einer Schwenkachse für die Schwenkbewegung des Ventilglieds 54. In dem in den Figuren 1 bis 4 gezeigten Ausführungsbeispiel kann das Ventilglied 54 ähnlich einer Wippe über das Lagerstück 130 abrollen bzw. abwälzen. Auf diese Weise ergibt sich in Abhängigkeit von der aktuellen Schwenklage eine momentane Schwenkachse für das Ventilglied 54.

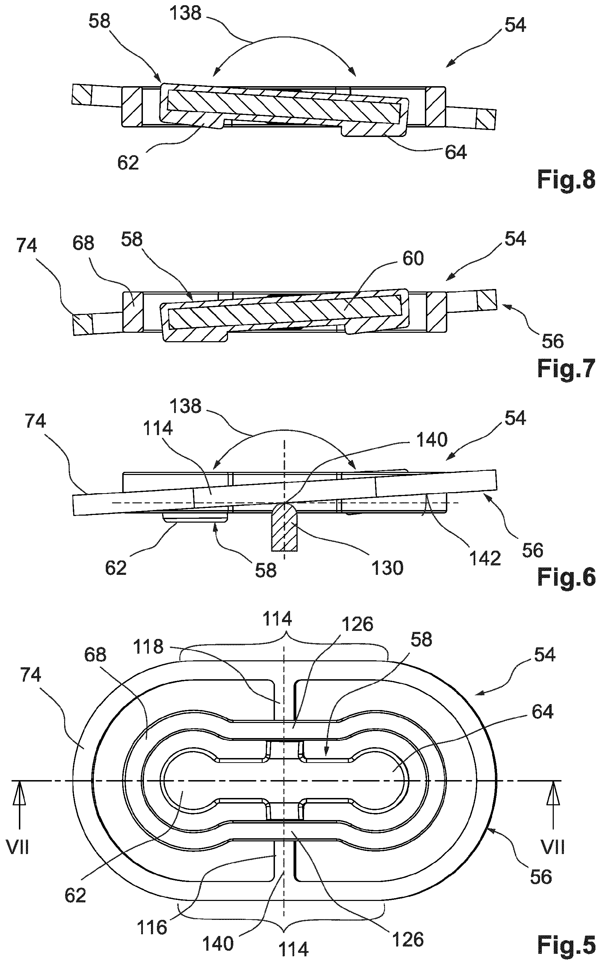

Die vorstehend mit Bezugnahme auf die Figuren 1 bis 4 veranschaulichte beispielhaft Ausführungsform einer Ventilanordnung 10 bzw. Vorrichtung 12 bildet die Grundlage für die nachfolgenden mit Bezugnahme auf die Figuren 5 bis 20 veranschaulichten Ausgestaltungen von Ventilgliedern und deren Anordnung/Funktion im Ventilgehäuse. Sofern nicht explizit auf Unterschiede eingegangen wird, wird davon ausgegangen, dass die nachfolgend veranschaulichten Ausgestaltungen von Ventilgliedern zur Verwendung in der Ventilanordnung 10 gemäß den Figuren 1 bis 4 geeignet sind, bzw. dass der Fachmann ohne weiteres entsprechende Anpassungsarbeiten etwa des Ventilgehäuses 24 vornehmen kann. Daher wird nachfolgend auf die weitere Detailgestaltung der Betätigungseinheit 16 und des Ventilglieds 14 der jeweiligen Vorrichtung 12 nicht im Einzelfall detailliert eingegangen.

Mit Bezugnahme auf die Figuren 5 bis 8 sowie mit ergänzendem Bezug auf die allgemeine Gestaltung der Ventilanordnung 10 gemäß den Figuren 1 bis 4 wird eine beispielhafte Gestaltung eines Ventilglieds 54 und dessen Verhalten beim Betrieb der Vorrichtung 12 bzw. der Ventilanordnung 10 zur Regelung eines Fluids beschrieben. Fig. 5 veranschaulicht eine Draufsicht auf das Ventilglied 54 (aus Sicht der Betätigungseinheit 16). Fig. 6 ist eine Seitenansicht hierzu. Fig. 7 und Fig. 8 sind geschnittene Seitenansichten in zwei Betriebszuständen/Schaltstellungen des Ventilglieds 54.

Inn Fig. 6 ist ferner mit 130 eine vereinfachte Darstellung eines Aufnahmestücks bzw. Lagerstücks bezeichnet, welches dem Ventilgehäuse (vergleiche Bezugszeichen 24 in Fig. 1) zugeordnet ist. Das Lagerstück 130 gemäß dem Ausgangsbeispiel nach den Figuren 5 bis 8 definiert einen Bereich, über den das Ventilglied 54 (zumindest dessen Rahmen 74 bzw. Gestell 56) abwälzen kann. Dies erfolgt bei einer Schwenkbewegung des Trägers 60 und folglich des Schließkörpers 58 zum Umschalten des Ventilglieds 54 und somit des Ventilabschnitts 14 der Vorrichtung 12. Die Schwenkbewegung/Wälzbewegung wird in den Figuren 6 bis 8 veranschaulicht. Fig. 7 und Fig. 8 zeigen jeweils einen Schnitt durch das Ventilglied 54, wobei der Schließkörper 58 und der Träger 60 in der Schnittebene angeordnet sind. Fig. 7 veranschaulicht eine erste Stellung des Ventilglieds 54, in der der Dichtungsabschnitt 62 des Schließkörpers 58 einen diesem zugeordneten Ventilsitz sperren kann. Fig. 8 veranschaulicht demgegenüber eine zweite Stellung des Ventilglieds 54, in der der Dichtungsabschnitt 64 des Schließkörpers 58 einen diesem zugeordneten Ventilsitz sperren kann.

Zum Übergang zwischen den Zuständen gemäß Fig. 7 und Fig. 8 wird das Ventilglied 54 betätigt und zumindest teilweise verschwenkt, vergleiche hierzu den gekrümmten Doppelpfeil 138 in Fig. 6. Diese Schwenkbewegung bzw. Umschaltbewegung wird über eine Betätigung des Rahmens 74 im jeweiligen Betätigungsabschnitt 114 ausgelöst. Dabei wälzt bzw. rollt der Rahmen 74 bzw. das gesamte Gestell 56 am Lagerstück 130 im Ventilgehäuse ab. Diese Wälzbewegung/Rollbewegung erfolgt um eine Schwenkachse 140. Bei der in den Figuren 5 bis 8 veranschaulichten Ausgestaltung handelt es sich bei der Schwenkachse 140 um eine momentane (wandernde) Schwenkachse. Die Schwenkachse 140 wird durch einen jeweiligen Kontakt zwischen dem Betätigungsabschnitt 114 und dem Lagerstück 130 definiert.

Die Bewegung des Betätigungsabschnitts 114 am Rahmen 74 wird über die Verbindungsstege 116, 118 auf den Träger 60 und folglich den Schließkörper 58 übertragen. Die Verbindungsstege 116, 118 ragen durch die Dichtung 68 hindurch, und zwar durch einen Durchtrittsbereich 126 der Dichtung 68. Die Dichtung 68 umgibt in der in Fig. 5 gezeigten Draufsicht den Träger 60 mit den daran aufgenommenen Dichtungsabschnitten 62, 64 des Schließkörpers 58. In Fig. 5 wird ferner veranschaulicht, dass das Ventilglied 54 gemäß diesem Ausführungsbeispiel symmetrisch zur Schnittebene VII-VII gestaltet ist. Auf jeder der beiden Seiten dieser Zentralebene VII-VII erstreckt sich einer der beiden Verbindungsstege 116, 118 durch einen entsprechenden Durchtrittsbereich 126 der Dichtung 68. Jeder der Verbindungsstege 116, 118 erstreckt sich zwischen dem (inneren) Träger 60 und dem (äußeren) Rahmen 74, um diese hinreichend steif miteinander zu verbinden. Auf diese Weise kann eine Betätigungsbewegung in den Betätigungsabschnitt 114 des Rahmens 74 eingeleitet und über die Verbindungsstege 116, 118 an den Träger 60 übertragen werden.

Die in den Figuren 5 bis 8 veranschaulichte Ausgestaltung führt jedoch dazu, dass die (momentane) Schwenkachse 140 von einer Mittelebene des Rahmens 74 bzw. Gestells 56 und einer Längsachse durch die Verbindungsstege 116, 118 beabstandet ist. In der in Fig. 6 gezeigten Ausgestaltung definiert eine Auflagefläche 142 an der dem Lagerstück 130 zugewandten Seite des Rahmens 74 die Schwenkachse 140. Demgemäß gibt es einen Versatz zwischen der Schwenkachse 140 und einer Mittenachse durch das Gestell 56, der bei dem Ausführungsbeispiel gemäß den Figuren 5 bis 8 etwa die Hälfte der Dicke des Gestells 56 beträgt.

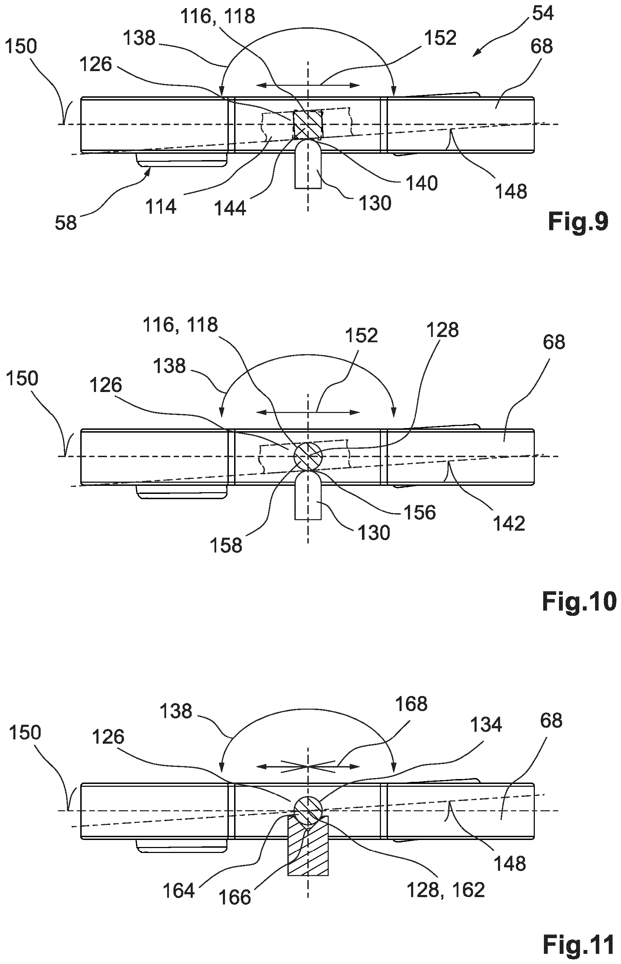

In diesem Zusammenhang veranschaulicht Fig. 9 in Ergänzung zu den Figuren 5 bis 8 Auswirkungen eines solchen Versatzes zwischen der Schwenkachse 140 und einer solchen Mittelebene 150 durch das Gestell 56 (bzw. den Rahmen 74 und/oder die Verbindungsstege 116, 118). Mit 148 ist in Fig. 9 eine momentane Neigung/Schwenkposition einer Kontaktfläche (vergleiche 142 in Fig. 6) des Gestells 56 gegenüber dem Lagerstück 130 angedeutet. Die in Fig. 9 veranschaulichte Ausführungsform weist bei den Verbindungstegen 116, 118 einen eckigen Querschnitt 144 auf. Mit diesem eckigen Querschnitt 144 kontaktiert der Verbindungssteg 116, 118 jeweils den Durchtrittsbereich 126 durch die Dichtung 68. Wenn nun der Rahmen 74 über den Betätigungsabschnitt 114 verschwenkt wird, die Dichtung 68 aber gleichzeitig dichtend im Ventilgehäuse 24 (vergleiche Fig. 1 und Fig. 4) aufgenommen ist, so gibt es eine Relativbewegung zwischen den Verbindungsstegen 116, 118 und der Dichtung 68 im Durchtrittsbereich 126.

Diese Relativbewegung führt in Verbindung mit dem eckigen Querschnitt 144 der Verbindungstege 116, 118 bei einem hinreichend hohen Druck in der Ventilkammer 32 (Fig. 1) unter Umständen zu Leckagen und Undichtigkeiten zwischen den Verbindungstegen 116, 118 und der Dichtung 68. In Fig. 9 veranschaulicht ein Doppelpfeil 152 eine sogenannte parasitäre Relativbewegung (Querbewegung) zwischen den Verbindungstegen 116, 118 und dem diese umgebenden Durchtrittsbereich 126 in der Dichtung 68. Auch wenn die parasitäre Bewegung nur kleine Umfänge hat, so kann dies sehr wohl die Neigung zu Undichtigkeiten erhöhen.

Zur Verringerung der Neigung zu Undichtigkeiten und Leckagen ist es vorstellbar, die Verbindungsstege 116, 118 günstiger zu gestalten, und/oder die Schwenkachse 140 in Richtung auf eine mittige Längsachse durch die Verbindungsstege 116, 118 zu verlagern, damit diese Achsen möglichst zusammenfallen. Die Figuren 10 und 11 veranschaulichen beispielhafte Ausgestaltung, die diese Aspekte berücksichtigen. Zur Komplettierung der dort schematisch veranschaulichten Ausführungsbeispiele wird auf die Figuren 1 bis 9 verwiesen.

Fig. 10 veranschaulicht eine Gestaltung, bei der die Verbindungsstege 116, 118 einen runden Querschnitt 158 aufweisen. Gleichwohl ist bei dieser Gestaltung noch ein Versatz zwischen einer Mittenachse 128 durch die Verbindungsstege 116, 118 und der (momentanen) Schwenkachse 156 gegeben, da die Kontaktfläche 142 des Rahmens 74 des Gestells 56 weiterhin am Lagerstück 130 abwälzt/abrollt. Somit gibt es weiterhin parasitäre Bewegungen 152 zwischen den Verbindung Stegen 116, 118 und dem diese umgebenden Durchtrittsbereich 126 der Dichtung 68. Da jedoch der Querschnitt 158 nunmehr rund bzw. kreisförmig gestaltet ist, ergeben sich gegenüber der in Fig. 9 gezeigten eckigen Ausgestaltung des dortigen Querschnitts 126 günstigere Kontaktverhältnisse zwischen Verbindungssteg 116, 118 und Durchtrittsbereich 126 der Dichtung 68. Somit kann die Leckagenneigung insbesondere bei einer hohen Dynamik reduziert werden.

Fig. 11 veranschaulicht eine weitere abgewandelte Ausführungsform, bei der die Verbindungsstege 116, 118 ebenso einen runden Querschnitt 164 aufweisen. Die Mittenachse 128 des Verbindungsstegs 116, 118 fällt in der in Fig. 11 gezeigten Ausgestaltung mit der Schwenkachse 162 zusammen. Dies wird durch eine Lageraufnahme 166 ermöglicht, welche den runden Querschnitt 164 derart aufnehmen und lagern kann, dass der Verbindungssteg 116, 118 um dessen Zentrum verschwenkbar ist. Der an der Lageraufnahme 166 angeordnete Abschnitt des Verbindungsstegs 116, 118 kann auch als Lagerabschnitt 134 bezeichnet werden. Damit werden etwaige parasitäre Bewegungen (parasitäre Querbewegungen, vergleiche das Bezugszeichen 168) zwischen den Verbindungsstegen 116, 118 und dem diese umgebenden Durchtrittsbereich 126 der Dichtung 68 reduziert oder gar vollends vermieden.

Wenn sich die mit rundem Querschnitt 164 versehenen Verbindungsstege 116, 118 im Durchtrittsbereich 126 um ihre Mittenachse 128 leicht verdrehen, gibt es nur geringe Relativbewegungen in Bezug auf die Dichtung 68. Auf diese Weise kann eine gute Abdichtung der Verbindungsstege 116, 118 gewährleistet werden. Somit eignet sich das Ventil auch bei einer hohen Schaltfrequenz/Dynamik für Hochdruck-Anwendungen. Die verbesserte Abdichtung wird einerseits durch den runden Querschnitt 164 und andererseits durch das Zusammenfallen der Mittenachse 128 mit der Schwenkachse 162 bewirkt. Beide Maßnahmen können für sich genommen bereits zu einer verbesserten Abdichtung führen. In Kombination erhöht sich die Dichtwirkung und Eignung für Hochdruck-Anwendungen weiter.

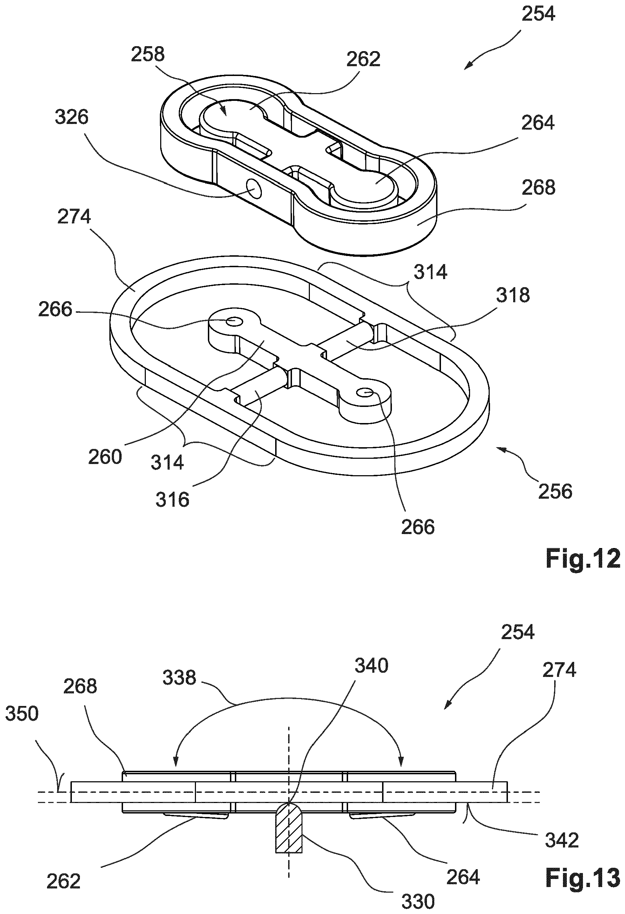

Nachfolgend werden mit Bezugnahme auf die Figuren 12 bis 20 weitere Ausgestaltungen von Ventilgliedern veranschaulicht, die die in den Figuren 10 und 11 gezeigten Prinzipien zur Optimierung der Dichtwirkung nutzen.

Fig. 12 und Fig. 13 veranschaulichen ein Ventilglied 254, welches ein Gestell 256 und einen Schließkörper 258 aufweist. Der Schließkörper 258 ist an einem Träger 260 des Gestells 256 aufgenommen. Am Schließkörper 258 ist ein erster Dichtungsabschnitt 262 und ein zweiter Dichtungsabschnitt 264 ausgebildet. Fig. 12 veranschaulicht ferner eine beispielhafte Ausgestaltung, bei der der Träger 260 in seinen Endbereichen jeweils mit einer Ausnehmung 266 versehen ist. Die Ausnehmungen 266 können zu einer besseren Verbindung zwischen dem Schließkörper 258 und dem Gestell 256, insbesondere dem Träger 260 beitragen. Wenn nämlich der Schließkörper 258 derart gefertigt wird, dass das Gestell 256 als Einlegeteil fungiert, so kann das Material für den Schließkörper 258 in die Ausnehmungen 266 eindringen. Sodann kann sich dort eine formschlüssige und/oder stoffschlüssige Lagesicherung ergeben. Vorzugsweise sind die Ausnehmungen 266 in solchen Bereichen des Trägers 260 angeordnet, bei denen die Dichtungsabschnitte 262, 264 des Schließkörpers 258 vorgesehen sind.

Es versteht sich, dass die Ausnehmungen 266 nicht nur bei dem Ausführungsbeispiel gemäß den Figuren 12 und 13 vorstellbar sind. Derartige Ausnehmungen im Träger für den Schließkörper können auch bei anderen im Rahmen dieser Offenbarung beispielhaft genannten Ausführungsformen verwendet werden. Die Ausnehmungen können als Durchgangslöcher und/oder Vertiefungen im jeweiligen Träger ausgebildet sein. Die Ausnehmungen können etwa durch ein geeignetes Trennverfahren/Material abtragendes Verfahren im Träger erzeugt werden

Ferner weist das Ventilglied 254 gemäß Fig. 12 und 13 eine Dichtung 268 auf, welche in beispielhaften Ausführungsformen als Bestandteil des Schließkörpers 258 oder integral mit diesem gefertigt ist. Im betriebsfähigen Zustand ist die Dichtung 268 zwischen einem umlaufenden Rahmen 274 des Gestells 256 und dem Träger 260 angeordnet. Der Schließkörper 258 ist im Bereich des Trägers 260 mit den beiden Dichtungsabschnitten 262, 264 versehen. Zwischen dem Rahmen 274 bzw. einen Betätigungsabschnitt 314 des Ventilglieds 254 und dem Träger 260 erstrecken sich Verbindungstege 316, 318. Die Verbindungstege 316, 318 sind zumindest in einem Durchtrittsbereich 326 durch die Dichtung 268 mit runden Querschnitten versehen, um günstige Kontaktverhältnisse zwischen den Verbindungsstegen 316, 318 und dem Durchtrittsbereich 326 der Dichtung 268 zu bewirken.

Fig. 13 veranschaulicht, dass weiterhin ein Versatz zwischen der (momentanen) Schwenkachse 340 und der Mittelebene 350 gegeben ist. Dies führt bei der Schwenkbewegung (Pfeil 338) zu einem Abwälzen der Auflagefläche 342 am Lagerstück 330. Gleichwohl erhöht die abgerundete/zylindrische Gestaltung der Verbindungstege 316, 318 (Fig. 12) die Dichtwirkung der Dichtung 268.

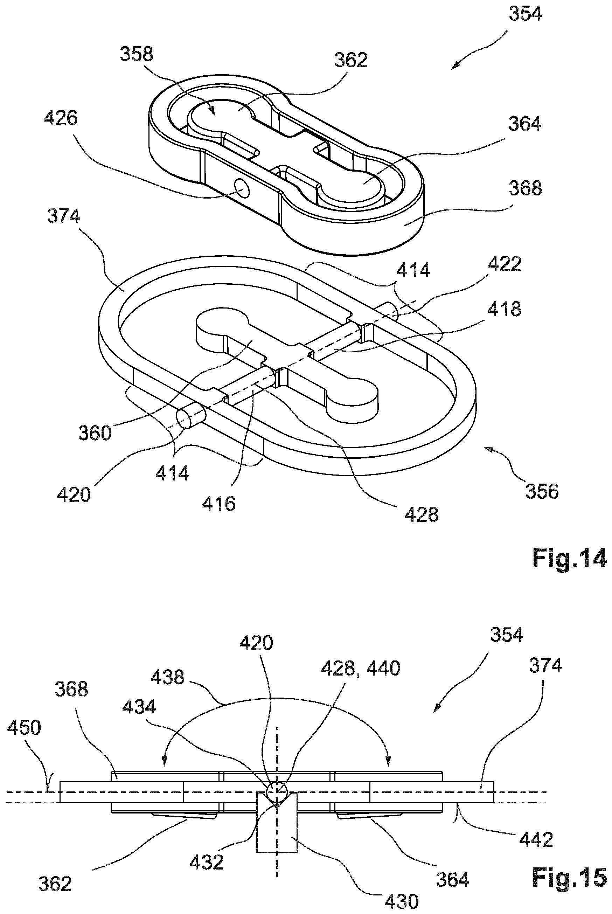

Anhand der Figuren 14 und 15 wird eine weitere beispielhafte Ausgestaltung eines Ventilglieds 354 veranschaulicht. Das Ventilglied 354 ist dem Ventilglied 254 gemäß Fig. 12 und 13 zumindest ähnlich gestaltet. Das Ventilglied 354 weist ein Gestell 356 und einen Dichtkörper 358 auf. Am Dichtkörper 358 sind Dichtungsabschnitte 362, 364 ausgebildet. Der Dichtkörper 358 ist an einem Träger 360 im Zentrum des Gestells 356 aufgenommen. Dem Dichtkörper 358 ist ferner eine Dichtung 368 zugeordnet. Die Dichtung 368 kann als Bestandteil des Dichtkörpers 358 ausgebildet sein. Das Gestell 356 weist ferner einen umlaufenden Rahmen 374 auf, in welchem ein Betätigungsabschnitt 414 zur Betätigung des Ventilglieds 354 ausgebildet ist. Zwischen dem Rahmen 374 und dem Träger 360 erstrecken sich Verbindungstege 416, 418. Die Verbindungstege 416, 418 haben zumindest abschnittsweise einen runden/kreisförmigen Querschnitt. Dies gilt insbesondere für einen Bereich der Verbindungstege 416, 418, in dem diese einen Durchtrittsbereich 426 durch die Dichtung 368 durchragen.

In Fig. 14 sind ferner Überstände bzw. Fortsätze 420, 422 dargestellt, welche konzentrisch zu den Verbindungsstegen 416, 418 bzw. als Verlängerung der Verbindungstege 416, 418 ausgebildet sind. Eine Mittenachse durch die Verbindungstege 416, 418 ist in Fig. 14 und Fig. 15 mit 428 bezeichnet. Die Fortsätze 420, 422 in Fig. 14 und Fig. 15 sind konzentrisch zur Mittenachse 428 ausgebildet. Die Fortsätze 420, 422 erstrecken sich außerhalb des Rahmens 374 als Verlängerungen der Verbindungstege 416, 418. Die Fortsätze 420, 422 können als Lagerzapfen benutzt werden.

Fig. 15 veranschaulicht ergänzend, dass den als Lagerzapfen gestalteten Fortsätzen 420, 422 gehäuseseitig ein Lagerstück 430 mit einer Lageraufnahme 432 zugeordnet ist. Die Lageraufnahme 432 ist in diesem Ausführungsbeispiel derart gestaltet, dass das Gestell 356 bei der Betätigung des Ventilglieds 354 um die Mittenachse 428 verschwenkt wird, so dass eine resultierende Schwenkachse 440 mit der Mittenachse 428 zusammenfällt. An der Lageraufnahme 432 ist ein Lagerabschnitt 434 angeordnet, welcher in diesem Ausgangsbeispiel durch die Fortsätze 420, 422 gebildet ist. Die Schwenkbewegung wird durch einen mit 438 bezeichneten gekrümmten Doppelpfeil veranschaulicht. Dies führt dazu, dass nicht mehr die Fläche 442 des Rahmens 374 zur Auflage am Gehäuse genutzt wird, sondern die zapfenartig gestalteten Fortsätze 420, 422, welche die Schwenkachse 440 definieren, die nahe der Mittelebene 450 oder sogar in der Mittelebene 450 durch die Verbindungstege 416, 418 angeordnet ist.

Es versteht sich, dass auch andere Gestaltungen der Lageraufnahme 432 zur Aufnahme und Lagerung der Fortsätze 420, 422 vorstellbar sind. Dies kann insbesondere die Gestaltung des Lagersitzes der Lageraufnahme 432 betreffen. Grundsätzlich ist es auch vorstellbar, den Lagerabschnitt 434 nicht außerhalb sondern innerhalb des Rahmens 474 anzuordnen. Demgemäß würden die Lagerabschnitte 434 und deren Kopplung mit dem gehäuseseitigen Lagerstück 430 näher an den Durchtrittsbereich 426 heranrücken.

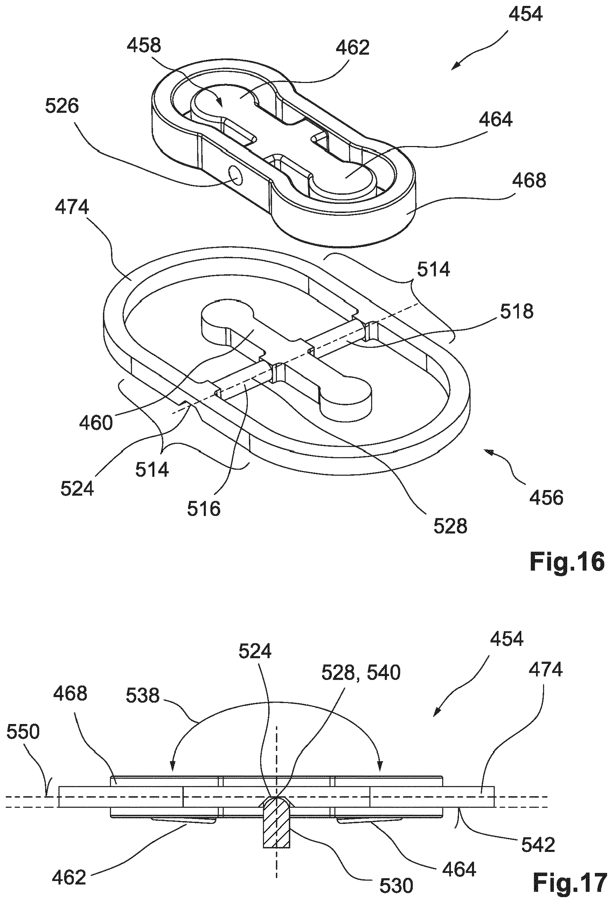

Anhand der Figuren 16 und 17 wird eine weitere beispielhafte Ausführungsform eines Ventilglieds 454 veranschaulicht, Das Ventilglied 454 ist dem Ventilglied 254 gemäß Fig. 12 und 13 bzw. dem Ventilglied 354 gemäß Fig. 14 und 15 zumindest ähnlich gestaltet. Das Ventilglied 454 weist ein Gestell 456 und einen Dichtkörper 458 auf. Am Dichtkörper 458 sind Dichtungsabschnitte 462, 464 ausgebildet. Der Dichtkörper 458 ist an einem Träger 460 im Zentrum des Gestells 456 aufgenommen. Dem Dichtkörper 458 ist ferner eine Dichtung 468 zugeordnet. Die Dichtung 468 kann als Bestandteil des Dichtkörpers 458 ausgebildet sein. Das Gestell 456 weist ferner einen umlaufenden Rahmen 474 auf, in welchem ein Betätigungsabschnitt 514 zur Betätigung des Ventilglieds 454 ausgebildet sind. Zwischen dem Rahmen 474 und dem Träger 460 erstrecken sich Verbindungstege 516, 518. Die Verbindungstege 516, 518 haben zumindest abschnittsweise einen runden/kreisförmigen Querschnitt. Dies gilt insbesondere für einen Abschnitt der Verbindungstege 516, 518, in dem diese einen Durchtrittsbereich 526 durch die Dichtung 468 durchragen.

In Fig. 16 und Fig. 17 ist ferner im Betätigungsabschnitt 514 bzw. am Rahmen 474 zumindest eine Einkerbung oder Ausnehmung 524 vorgesehen, vergleiche auch die seitliche Ansicht in Fig. 17. Die Ausnehmung 524 sorgt für die gewünschte Verlagerung der Schwenkachse 540 in Richtung auf die Mittelebene 550 bzw. eine Mittenachse 528 durch die Verbindungstege 516, 518 hindurch. Gemäß der in den Figuren 16 und 17 veranschaulichten Ausführungsform steht am Gehäuse ein Lagerstück 530 bereit, welches vom Ventilglied 454 im Bereich der Ausnehmung 524 kontaktiert wird. Die Schwenkbewegung wird durch einen mit 538 bezeichneten gekrümmten Doppelpfeil veranschaulicht. Dies führt dazu, dass nicht mehr die Fläche 542 des Rahmens 474 zur Auflage am Gehäuse genutzt wird, sondern die Ausnehmungen 524 im Rahmen 474, welche die Schwenkachse 540 definieren, die nahe der Mittelebene 550 oder sogar in der Mittelebene 550 bzw. konzentrisch zur Mittenachse 528 durch die Verbindungstege 516, 518 angeordnet ist.

Die Einkerbung oder Ausnehmung 524 kann durch ein geeignetes materialabtragendes Verfahren und/oder ein Umformverfahren in den Betätigungsabschnitt 514 bzw. den Rahmen 474 eingebracht werden. Es versteht sich, dass auch andere Gestaltungen des Lagerstücks 530 und der Ausnehmung 524 vorstellbar sind. In Fig. 16 und 17 wird im Betätigungsabschnitt 514 Material am Rahmen 474 abgetragen, um die Ausnehmung 524 zu bilden.

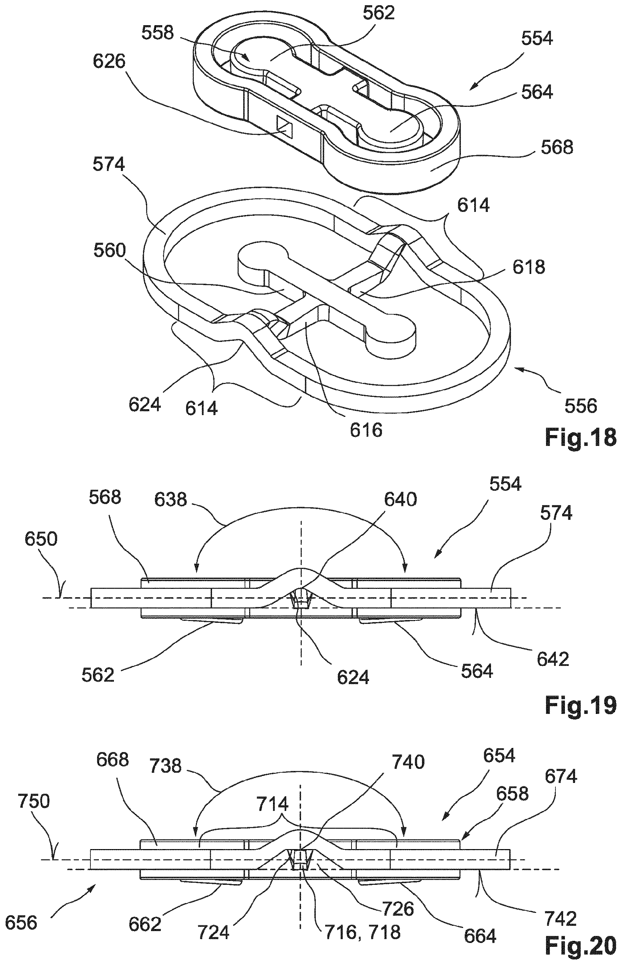

Mit Bezugnahme auf Fig. 18 und Fig. 19 wird eine weitere alternative Ausgestaltung eines Ventilglieds 554 veranschaulicht. Das Ventilglied 554 weist ein Gestell 556 und einen Schließkörper 558 auf. Am Schließkörper 558 sind Dichtungsabschnitte 562, 564 ausgebildet. Das Gestell 556 weist einen umlaufenden Rahmen 574 und innerhalb des Rahmens 574 einen Träger 560 auf. Der Rahmen 574 und der Träger 560 sind über Verbindungstege 616, 618 miteinander verbunden. Am Rahmen 574 sind Betätigungsabschnitte 614 ausgebildet, über die das Ventilglied 554 betätigbar ist. Die Verbindungstege 516, 518 erstrecken sich im montierten Zustand des Schließkörpers 558 durch einen Durchtrittsbereich 626 des Schließkörpers 558 hindurch.

Bei dem in Fig. 18 und Fig. 19 gezeigten Ausführungsbeispiel weisen die Verbindungstege 616, 618 einen eckigen Querschnitt auf, vergleiche auch die Darstellung des Durchtrittsbereichs 626 in Fig. 18. Am Rahmen 574 des Gestells 556 ist eine als Einkerbung gestaltete Ausnehmung 624 ausgebildet. Die Ausnehmung 624 wird bei dem anhand der Figuren 18 und 19 veranschaulichten Ausführungsbeispiel durch ein abschnittsweises Umformen/Prägen des Rahmens 574 im Bereich der Betätigungsabschnitte 614 erzeugt. Die Ausnehmung 624 definiert einen Lagerbereich, in dem das Ventilglied 554 bzw. dessen Gestell 556 mit einer/einem diesem zugeordneten Gehäuseauflage/Lagerstück (in Fig. 18 und Fig. 19 nicht gezeigt) zusammenwirkt.

Die Gestaltung der Ausnehmung 624 ermöglicht eine Wippbewegung bzw. Verkippung des Rahmens 574 gegenüber dem Gehäuse zu Umschalten des Ventilglieds 554, vergleiche den gekrümmten Doppelpfeil 638 in Fig. 19. Je nachdem, wie die gegen Kontur gestaltet ist, ergibt sich eine resultierende Schwenkachse 640 in Richtung auf eine Mittelebene 650 durch die Verbindungstege 616, 618, zumindest im Durchtrittsbereich 626. Ferner ergeht aus Fig. 19, dass nicht mehr die (untere) Fläche 642 des Rahmens 574 zur Auflage am Gehäuse genutzt wird, sondern die Ausnehmungen 624 im Rahmen 574, welche (gemeinsam mit dem zugehörigen gehäuseseitigen Lagerstück) die Schwenkachse 640 definieren.

Fig. 20 veranschaulicht eine dem Ventilglied 554 gemäß Fig. 19 sehr ähnlich gehaltene Ausgestaltung eines Ventilglieds 654. Das Ventilglied 654 weist ein Gestell 656 und einen Schließkörper 658 auf. Am Schließkörper 658 sind Dichtungsabschnitte 662, 664 ausgebildet. Das Gestell 656 umfasst einen Träger (in Fig. 20 verdeckt) für den Schließkörper 658. Das Gestell 656 umfasst ferner einen Rahmen 674, der den Träger umgibt. Zwischen dem Träger und dem Rahmen 674 ist eine umlaufende Dichtung 668 angeordnet, die dem Schließkörper 658 zugeordnet oder mit diesem verbunden ist.

Zwischen dem Träger und dem Rahmen 674 erstrecken sich Verbindungstege 716, 718, welche die Dichtung 668 in einem Durchtrittsbereich 726 durchragen. In einer Flucht mit den Verbindungsstegen 716, 718 ist am Rahmen 674 in Betätigungsabschnitt 714 eine Ausnehmung 724 angeordnet. Mit anderen Worten ist der Rahmen 674 im Bereich des Betätigungsabschnitts 714 teilweise gekröpft gestaltet, um die Ausnehmung 724 zu bilden. In einer weiteren beispielhaften Ausführungsform sind auch die Verbindungstege 716, 718 in Richtung auf den Rahmen 674 leicht gekröpft, um die Ausnehmung 724 auszubilden. Fig. 20 veranschaulicht ferner, dass die resultierende Schwenkachse 740 nicht mehr über die (untere) Fläche 742 sondern über die hierzu versetzte Ausnehmung 724 definiert wird. Die Ausnehmung 724 ist derart gestaltet, dass sich in Verbindung mit dem gehäuseseitigen Lagerstück (nicht dargestellt in Fig. 20) eine Schwenkachse 740 ergibt, welche in Richtung auf die Mittelebene 750 verlagert ist. Auf diese Weise ergeben sich bei der Bewegung des Ventilglieds 654 im Durchtrittsbereich 724 der Dichtung 658 geringere parasitäre Relativbewegungen, die zu Undichtigkeiten führen können.

## Patentansprüche

1. Vorrichtung zur Durchflussregelung eines Fluids, mit
- einem Ventilgehäuse (24) mit zumindest zwei Ventilanschlüssen (26, 28, 30), wobei im Ventilgehäuse (24) zumindest ein Fluidpfad (34, 36) ausgebildet ist, der sich zwischen den zumindest zwei Ventilanschlüssen (26, 28, 30) erstreckt,
- zumindest einem Ventilsitz (50, 52), der dem zumindest einen Fluidpfad (34, 36) zugeordnet ist,
- einem Ventilglied (54, 254, 354, 454, 554, 654) mit einem Schließkörper (58, 258, 358, 458, 558), der mit dem zumindest einen Ventilsitz (50, 52) koppelbar ist, um den zumindest einen Fluidpfad (34, 36) zu sperren oder freizugeben, und
- einer Betätigungseinheit (16) zur Betätigung des Schließkörpers (58, 258, 358, 458, 558),
wobei das Ventilglied (54, 254, 354, 454, 554, 654) ferner einen Betätigungsabschnitt (114, 314, 414, 514, 614) aufweist, der über zumindest einen Verbindungssteg (116, 118; 316, 318; 416, 418; 516, 518; 616, 618) mit dem zumindest einen Schließkörper (58, 258, 358, 458, 558) zur Bewegung des Schließkörpers (58, 258, 358, 458, 558) verbunden ist,
wobei sich zwischen dem Schließkörper (58, 258, 358, 458, 558) und dem Betätigungsabschnitt (114, 314, 414, 514, 614) eine umlaufende Dichtung (68, 268, 368, 468, 568, 668) erstreckt, die den Schließkörper (58, 258, 358, 458, 558) und den Betätigungsabschnitt (114, 314, 414, 514, 614) voneinander trennt, und
wobei der zumindest eine Verbindungssteg (116, 118; 316, 318; 416, 418; 516, 518; 616, 618) derart gestaltet ist, dass der Schließkörper (58, 258, 358, 458, 558) bei einer Betätigung des Betätigungsabschnitts (114, 314, 414, 514, 614) durch die Betätigungseinheit (16) verschwenkbar ist, um das Ventilglied (54, 254, 354, 454, 554, 654) und somit den Schließkörper (58, 258, 358, 458, 558) relativ zum zumindest einen Ventilsitz (50, 52) zu bewegen,
**dadurch gekennzeichnet, dass** das Ventilglied (54, 254, 354, 454, 554, 654) bei der Bewegung des Schließkörpers (58, 258, 358, 458, 558) zur Deformationsminimierung in einem Durchtrittsbereich (126, 326, 426 526, 626) der Dichtung (68, 268, 368, 468, 568, 668), durch den sich der zumindest eine Verbindungssteg (116, 118; 316, 318; 416, 418; 516, 518; 616, 618) erstreckt, ausgebildet ist.

2. Vorrichtung nach Anspruch 1, **dadurch gekennzeichnet, dass** das Ventilglied (54, 254, 354, 454, 554, 654) bei der Betätigung durch die Betätigungseinheit (16) um eine Schwenkachse (140, 156, 162, 340, 440, 540, 640, 740) verschwenkbar ist, und dass die Schwenkachse (140, 156, 162, 340, 440, 540, 640, 740) in Richtung einer Mittelebene (150, 350, 450, 550, 650, 750) durch die Dichtung (68, 268, 368, 468, 568, 668) versetzt ist.

3. Vorrichtung nach Anspruch 2, **dadurch gekennzeichnet, dass** der Betätigungsabschnitt (114, 314, 414, 514, 614) und/oder der zumindest eine Verbindungssteg (116, 118; 316, 318; 416, 418; 516, 518; 616, 618) gekröpft sind, um den Versatz der Schwenkachse (140, 156, 162, 340, 440, 540, 640, 740) zu bewirken.

4. Vorrichtung nach Anspruch 2 oder 3, **dadurch gekennzeichnet, dass** der Betätigungsabschnitt (114, 314, 414, 514, 614) und/oder der zumindest eine Verbindungssteg (116, 118; 316, 318; 416, 418; 516, 518; 616, 618) mit einer Einkerbung (524, 624, 724) versehen sind, um den Versatz der Schwenkachse (140, 156, 162, 340, 440, 540, 640, 740) zu bewirken.

5. Vorrichtung nach einem der Ansprüche 1 bis 4, **dadurch gekennzeichnet, dass** der zumindest eine Verbindungssteg (116, 118; 316, 318; 416, 418; 516, 518; 616, 618) zumindest im Durchtrittsbereich (126, 326, 426 526, 626) einen runden Querschnitt aufweist.

6. Vorrichtung nach einem der Ansprüche 1 bis 5, **dadurch gekennzeichnet, dass** das Ventilglied (54, 254, 354, 454, 554, 654) um eine Schwenkachse (140, 156, 162, 340, 440, 540, 640, 740) verschwenkbar ist, die einer Mittenachse (128, 428) des zumindest einen Verbindungsstegs (116, 118; 316, 318; 416, 418; 516, 518; 616, 618) im Durchtrittsbereich (126, 326, 426 526, 626) benachbart ist und vorzugsweise mit dieser zusammenfällt.

7. Vorrichtung nach einem der Ansprüche 1 bis 6, **dadurch gekennzeichnet, dass** eine oder die Schwenkachse (140, 156, 162, 340, 440, 540, 640, 740) des Ventilglieds (54, 254, 354, 454, 554, 654) durch den zumindest einen Verbindungssteg (116, 118; 316, 318; 416, 418; 516, 518; 616, 618) und ein korrespondierendes Lagerstück (130) am Ventilgehäuse (24) definiert ist.

8. Vorrichtung nach Anspruch 7, **dadurch gekennzeichnet, dass** der Verbindungssteg (116, 118; 316, 318; 416, 418; 516, 518; 616, 618) zumindest in einem mit einem runden Querschnitt versehenen Lagerabschnitt (134, 434) im Lagerstück (130) am Ventilgehäuse (24) geführt ist.

9. Vorrichtung nach Anspruch 7 oder 8, **dadurch gekennzeichnet, dass** an einer vom Schließkörper (58, 258, 358, 458, 558) abgewandten Seite des Betätigungsabschnitts (114, 314, 414, 514, 614) ein Fortsatz (420, 422) des Verbindungsstegs (116, 118; 316, 318; 416, 418; 516, 518; 616, 618) ausgebildet ist, und dass der Fortsatz (420, 422) in der Aufnahme am Ventilgehäuse (24) geführt und mit einem runden Querschnitt versehen ist.

10. Vorrichtung nach einem der Ansprüche 1 bis 9, **dadurch gekennzeichnet, dass** der Betätigungsabschnitt (114, 314, 414, 514, 614) Teil eines Betätigungsrahmens (74, 274, 374, 474, 574) ist, der den Schließkörper (58, 258, 358, 458, 558) umgibt, und dass sich zwei einander gegenüberliegende Verbindungsstege (116, 118; 316, 318; 416, 418; 516, 518; 616, 618) zwischen dem Betätigungsrahmen (74, 274, 374, 474, 574) und dem Schließkörper (58, 258, 358, 458, 558) erstrecken.

11. Vorrichtung nach einem der Ansprüche 1 bis 10, **dadurch gekennzeichnet, dass** das Ventilglied (54, 254, 354, 454, 554, 654) einen Träger (60, 260, 360, 460, 560, 660) aufweist, und dass der Träger (60, 260, 360, 460, 560, 660), der zumindest eine Verbindungssteg (116, 118; 316, 318; 416, 418; 516, 518; 616, 618) und der Betätigungsabschnitt (114, 314, 414, 514, 614) fest miteinander verbunden sind und/oder Teil eines einstückig gestalteten Gestells (56, 256, 356, 456, 556) sind.

12. Vorrichtung nach Anspruch 11, **dadurch gekennzeichnet, dass** zumindest der Träger (60, 260, 360, 460, 560, 660) oder der Betätigungsrahmen (74, 274, 374, 474, 574) mit ihrer Längserstreckung die Mittelebene (150, 350, 450, 550, 650, 750) definieren.

13. Vorrichtung nach einem der Ansprüche 1 bis 12, **dadurch gekennzeichnet, dass** das Ventilglied (54, 254, 354, 454, 554, 654) zumindest einen Lagerabschnitt (134, 434) mit rundem Querschnitt aufweist, der dem Betätigungsabschnitt (114, 314, 414, 514, 614) benachbart ist, und dass der zumindest eine Lagerabschnitt (134, 434) ein Bestandteil des Verbindungsstegs (116, 118; 316, 318; 416, 418; 516, 518; 616, 618) an einer dem Schließkörper (58, 258, 358, 458, 558) zugewandten Seite des Betätigungsabschnitts (114, 314, 414, 514, 614) oder eine Fortsetzung des Verbindungsstegs (116, 118; 316, 318; 416, 418; 516, 518; 616, 618) an einer vom Schließkörper (58, 258, 358, 458, 558) abgewandten Seite des Betätigungsabschnitts (114, 314, 414, 514, 614) ist.

14. Vorrichtung nach einem der Ansprüche 1 bis 13, **dadurch gekennzeichnet, dass** das Ventilgehäuse (24) drei Ventilanschlüsse (26, 28, 30) umfasst, wobei im Ventilgehäuse (24) zwei Fluidpfade (34, 36) ausgebildet sind, die sich zwischen den drei Ventilanschlüssen (26, 28, 30) erstrecken, dass die Vorrichtung ferner zwei Ventilsitze (50, 52) aufweist, von denen je einer einem der zwei Fluidpfade (34, 36) zugeordnet ist, dass der Schließkörper (58, 258, 358, 458, 558) zwei Dichtungsabschnitte aufweist, von denen je einer einem der beiden Ventilsitze (50, 52) zugeordnet ist, und dass das Ventilglied (54, 254, 354, 454, 554, 654) verschwenkbar ist, um wechselseitig einen der beiden Ventilsitze (50, 52) freizugeben oder zu sperren.

15. Ventilanordnung mit einer Vorrichtung (12) nach einem der vorhergehenden Ansprüche.
